# EUROPÄISCHE PATENTSCHRIFT

(11) **EP 2 863 215 B1**
(45) Veröffentlichungstag und Bekanntmachung des Hinweises auf die Patenterteilung: **15.01.2020**
(21) Anmeldenummer: 14179149.1
(22) Anmeldetag: 30.07.2014
(51) Int. Cl.: G01N 29/024, G01N 29/22, G01F 1/66, G01F 15/18

(54) **Sensorvorrichtung zur Erfassung von Eigenschaften fluider Medien**
Sensor device for measuring characteristics of fluid media
Dispositif de capteur destiné à détecter les propriétés d'un milieu fluidique

(30) Priorität: 31.07.2013 DE 202013006909 U
(43) Veröffentlichungstag der Anmeldung: 22.04.2015
(73) Patentinhaber: Seuffer GmbH & Co. KG, 75365 Calw-Hirsau (DE)
(72) Erfinder: Harr, Jürgen, 75365 Calw-Hirsau (DE)
(74) Vertreter: Winter, Brandl, Fürniss, Hübner, Röss, Kaiser, Polte - Partnerschaft mbB

(56) Entgegenhaltungen:
- EP-A1- 0 897 101
- EP-A2- 2 410 299
- DE-U1- 9 420 760
- JP-A- 2005 181 122
- JP-A- 2005 265 711
- US-A1- 2003 136 193

## Beschreibung

Die vorliegende Erfindung betrifft eine Sensorvorrichtung zur Erfassung von Eigenschaften flüssiger Medien, und insbesondere eine in ein Rohrleitungssystem einsetzbare Sensorvorrichtung zur Erfassung der Eigenschaften der im Rohrleitungssystem strömenden flüssigen Medien.

In industriellen Einrichtungen und auch in privaten Haushalten ist es erforderlich, die Eigenschaften von fluiden Medien, wie beispielsweise Gasen oder Flüssigkeiten, zu erfassen, wenn bestimmte Eigenschaften dieser Medien für eine Anwendung wesentlich sind. Die Medien können beispielsweise in Form von Betriebsstoffen wie Brennstoffe oder Schmieröle, oder in Form von weiteren fluiden Produkten vorliegen, die aus einem Fertigungsprozess stammen und deren Eigenschaften (beispielsweise die Qualität des Produkts) kontinuierlich oder in Stichproben überprüft werden soll.

Eine Sensorvorrichtung zur Erfassung von Materialeigenschaften ist beispielsweise aus der Druckschrift WO 98/050790 A bekannt, wobei auf der Basis der Dielektrizitätseigenschaft (Dielektrizitätskonstante, Permittivität) die Eigenschaften und damit die einer Veränderung unterliegende Qualität eines Öls erfasst werden. Der Sensor in Form eines kapazitiven Sensors steht in direktem Kontakt mit dem Öl und ist mit einer Oszillatorschaltung verbunden. Die Oszillatorschaltung gibt nach entsprechender Ansteuerung ein Ausgangssignal ab, dessen Amplitude von den dielektrischen Eigenschaften des Öls abhängt. Aus diesen Werten kann für eine bestimmte Anwendung ein sinnvolles Maß für die Ölqualität bestimmt werden.

Die Druckschriften JP 2004 340911 A und US 5 471 872 A offenbaren die Anwendungen von Ultraschallsignalen zur Erfassung des Füllstands eines Behälters. Eine Ultraschallsende-/emfangseinrichtung sendet Ultraschallsignale innerhalb einer Flüssigkeit zur nächsten Grenzfläche der Flüssigkeit zur Luft oder innerhalb eines Luftvolumens zur nächsten Grenzfläche zur Flüssigkeit. Hierbei ist eine winkelförmige Anordnung vorgesehen, wobei gesendete und empfangene Ultraschallsignale jeweils in einem vorbestimmten Winkel reflektiert werden, so dass die gesendeten Ultraschallsignale auf eine zu erfassende Grenzfläche gerichtet werden. Zur weiteren Erfassung von Parametern der Flüssigkeit ist ein Referenzreflektor vorgesehen, der eine genaue Messung der Laufzeiten der Ultraschallsignale in dem Medium oder in der Luft erfasst und somit zu einer Verbesserung der Genauigkeit führt.

Die Druckschrift US 2003/0136193 A1 offenbart einen Gaskonzentrationssensor, bei dem eine Messung der Gaskonzentration mittels Ultraschallsignalen erfolgt. Die Anordnung ist in einer Leitung eingesetzt, in der das zu erfassende Gas strömt. Hierbei wird ein Messraum gebildet, an dessen einem Ende ein Ultraschallwandler zum Senden und Empfangen von Ultraschallsignalen ausgebildet ist, und an dessen anderem Ende ein Reflektor vorgesehen ist. In einer alternativen Ausführungsform können an beiden Enden des Messraums jeweils Ultraschallwandler angeordnet werden, so dass einer der Ultraschallwandler die Ultraschallsignale des jeweils anderen Ultraschallwandlers empfängt. Die gesamte Anordnung erfordert Maßnahmen zur Kalibrierung und zum Ausbilden eine Referenzstrecke, wobei zu diesem Zweck ein Kalibrierungsgas mit bekannten Werten eingeleitet und gemessen wird. Bei der Erfassung können Korrekturen in Abhängigkeit von der erfassten Temperatur des durch die Anordnung strömenden Gases vorgenommen werden.

Die Druckschrift JP 2005 181122 A offenbart einen Gassensor, wobei die gesamte Anordnung, bei der die Messungen mittels Ultraschallsignalen erfolgen, hinsichtlich der Abmessungen möglichst klein gehalten werden soll. Es wird ein Messraum in einem im Wesentlichen einstückigen Gehäuse gebildet, wobei verschiedene Reflexionsflächen in unterschiedlicher Anordnung im Bereich des Messraums vorgesehen sind. Es können ferner die Messraumwände ebenfalls in schräger Anordnung vorgesehen sein, um auf diese Weise die Reflexionsflächen zu bilden. Der zugehörige Ultraschallwandler befindet sich auf einer Seite des Messraums. In dem Gehäuse sind zur Durchströmung des Gases Einlass- und Auslassbereiche angeordnet.

Die Druckschrift EP 2 410 299 A2 offenbart ein Gehäuse für eine Ultraschall-Messeinrichtung zum Messen eines Fluidflusses, und ein Verfahren zur Herstellung eines Gehäuses, wobei das Gehäuse der Messeinrichtung mehrteilig ausgeführt ist. Innerhalb einer Messkammer wird eine Messstrecke gebildet, indem in beiden Endbereichen der Messkammer schräge Reflexionsflächen angeordnet sind, mittels denen die Ultraschallsignale von und zu einem betreffenden Ultraschallwandler geleitet werden. Hierzu sind zwei Ultraschallwandler vorgesehen. In den Hauptteilen des Gehäuses sind jeweilige Einbauplätze für die Ultraschallwandler zum Senden und/oder Empfangen ausgebildet. Es ergibt sich auf diese Weise ein U-förmiger Signalweg bzw. Laufweg der Ultraschallsignale zwischen den Ultraschallwandlern und den entsprechenden schrägen Reflektoren. Im Bereich der Reflektoren finden in Abhängigkeit von der Strömungsrichtung des fluiden Mediums die Ein- und Ausströmung statt. Im Einzelnen sind in dieser Druckschrift verschiedene Möglichkeiten der Verbindung jeweiliger Gehäuseteile beschrieben.

Die Druckschrift EP 0 897 101 A1 offenbart einen Ultraschall-Durchflussmesser, wobei die gesamte Anordnung in einem Gehäuse ausgebildet ist. In Endbereichen des Gehäuses und somit auch an den Enden einer in dem Gehäuse gebildeten Messstrecke sind einerseits schräge Reflektoren angeordnet, und sind andererseits gegenüberliegend zu den Reflektoren Ultraschallwandler vorgesehen zum Empfangen und/oder Senden von Ultraschallsignalen. Es ist somit bei dem Ultraschall-Durchflussmesser eine U-förmige Messstrecke ausgebildet. Benachbart zu den jeweiligen Reflektoren findet die Einströmung oder Ausströmung eines zu erfassende fluiden Mediums in Abhängigkeit von der gewünschten Strömungsrichtung statt. Auf der jeweiligen Einströmungs- oder Ausströmungsseite der Reflektoren sind Verdrängungskörper ausgebildet, um den Strömungswiderstand des fluiden Mediums zu vermindern, der durch die Reflektoren gegenüber dem strömenden Medium erzeugt wird.

Schließlich offenbart die Druckschrift DE 94 20 760 U1 einen Durchflussmesser, wobei in einem allgemeinen Gehäuse mittels eines separaten Rohrs die hautsächliche Messstrecke vorgesehen ist. Die Messstrecke ist U-förmig ausgebildet und verläuft von entsprechenden Ultraschallwandlern auf diesen gegenüberliegende Reflektoren und wieder über die Reflektoren zurück den Ultraschallwandlern. Hinter den jeweiligen Reflektoren sind die Einström- oder Ausströmbereiche entsprechend der Strömungsrichtung des zu erfassenden fluiden Mediums ausgebildet.

Einige der aus den vorstehend angegebenen Druckschriften bekannten Einrichtungen weisen den Nachteil auf, dass sie in einem Tank oder in allgemeiner Form in einem entsprechenden Behälter mit dem zu erfassenden Medium angeordnet sind, und hinsichtlich ihrer mechanischen Abmessungen eine vorbestimmte Baugröße aufweisen, die auf die Anordnungen in einem Tank oder Behälter und dessen Baugröße ausgerichtet sind. Ferner sind aufwendige Führungselemente zum gezielten Reflektieren der gesendeten und empfangenen Ultraschallsignale in vorbestimmter Anordnung erforderlich, so dass dies im Ergebnis zu einem aufwendigen Aufbau und damit zu einer erhöhten Komplexität und größeren Kosten bei der Herstellung führt.

Weitere aus den Druckschriften bekannte Einrichtungen betreffen eine Durchflussmessung und Strömungserfassung mittels Ultraschall und beziehen sich speziell auf den grundsätzlichen Aufbau und die Anordnung beispielsweise der Reflektoren innerhalb eines Gehäuses sowie auch mit der mechanischen Verbindung von Gehäuseteilen im Zusammenhang mit einer erleichterten Herstellung oder Montage.

Die Druckschriften beziehen sich jedoch nicht auf die Möglichkeit einer Verschlechterung einer Messung und eine damit einhergehende Beeinträchtigung der Auswertung der Erfassungsergebnisse, beispielsweise durch infolge eines Schwappens oder auf sonstige Weise eingebrachte oder erzeugte Luft- oder Gasblasen.

Der vorliegenden Erfindung liegt demgegenüber die Aufgabe zugrunde, eine Vorrichtung zur Erfassung der Eigenschaften flüssiger Medien derart auszugestalten, dass sich einerseits ein einfacher und kostengünstig herzustellender Aufbau ergibt, und andererseits eine genaue Erfassung der Eigenschaften des flüssigen Mediums gewährleistet ist, ohne dass die Erfassung durch ungünstige Rahmenbedingungen gestört werden kann.

Erfindungsgemäß wird diese Aufgabe mit den in den Patentansprüchen angegebenen Merkmalen gelöst.

Die vorliegende Erfindung betrifft eine Sensorvorrichtung gemäß einem ersten Aspekt zur Erfassung von Eigenschaften eines flüssigen Mediums mittels Ultraschallsignalen, mit einem ersten Anschlusselement und einem davon beabstandeten zweiten Anschlusselement und einem zwischen den Anschlusselementen angeordneten Messraum, der mittels der Anschlusselemente abgeschlossen wird und von dem flüssigen Medium durchströmt und mit diesem gefüllt ist, und einem Ultraschallmodul, das Ultraschallsignale in den Messraum sendet und reflektierte Ultraschallsignale aus dem Messraum empfängt, wobei die Anschlusselemente jeweilige Reflexionsflächen aufweisen, zum vorbestimmten Reflektieren der Ultraschallsignale im Messraum, und die Anschlusselemente jeweilige Öffnungen aufweisen zum Ein- und Ausströmen des flüssigen Mediums in den und aus dem Messraum, und die Öffnungen oberhalb der Reflexionsflächen ausgebildet sind.

Die Anschlusselemente weisen einerseits benachbart zu den und oberhalb der Reflexionsflächen jeweils einen Bereich parallel zur Erstreckungsrichtung (Längsachse) des Messraums auf, in welchem die jeweilige Öffnung der Anschlusselemente ausgebildet sind, und die Ein- und Ausströmung des flüssigen Mediums erfolgt zwischen dem Bereich und einem benachbarten Teil einer Messraumwand.

Die vorliegende Erfindung betrifft eine Sensorvorrichtung gemäß einem zweiten Aspekt zur Erfassung von Eigenschaften eines flüssigen Mediums mittels Ultraschallsignalen, mit einem ersten Anschlusselement und einem davon beabstandeten zweiten Anschlusselement und einem zwischen den Anschlusselementen angeordneten Messraum, der mittels der Anschlusselemente abgeschlossen wird und von dem flüssigen Medium durchströmt und mit diesem gefüllt ist, und einem Ultraschallmodul, das Ultraschallsignale in den Messraum sendet und reflektierte Ultraschallsignale aus dem Messraum empfängt, wobei das Ultraschallmodul in einem der beiden Anschlusselemente angeordnet ist und die Ultraschallsignale in Richtung einer Erstreckungsrichtung (erste Erstreckungsrichtung oder Längsachse) des Messraums sendet und das andere der Anschlusselemente eine ebene Reflexionsfläche senkrecht zur Längsachse des Messraums aufweist zum Reflektieren der Ultraschallsignale zurück zum Ultraschallmodul, und die Anschlusselemente jeweilige Öffnungen aufweisen zum Ein- und Ausströmen des flüssigen Mediums in den und aus dem Messraum, und die Öffnungen jeweils oberhalb der Reflexionsfläche und der Position des Ultraschallmoduls ausgebildet sind.

Die Anschlusselemente weisen einerseits benachbart zu den und oberhalb der Reflexionsflächen jeweils einen Bereich parallel zur Erstreckungsrichtung (Längsachse) des Messraums auf, in welchem die jeweilige Öffnung der Anschlusselemente ausgebildet sind, und die Ein- und Ausströmung des flüssigen Mediums erfolgt zwischen dem Bereich und einem benachbarten Teil einer Messraumwand.

Mit der erfindungsgemäßen Anordnung gemäß dem ersten und zweiten Aspekt der Erfindung ergibt sich ein vergleichsweise einfacher Aufbau der Sensorvorrichtung, der in Form einer kompakten Vorrichtung (beispielsweise als ein Modul) hergestellt werden kann. Die Sensorvorrichtung kann leicht in ein Rohrleitungssystem für das flüssige Medium eingesetzt werden. Der einfache Aufbau weist des Weiteren eine geringe Störanfälligkeit auf, so dass eine genaue Messung bzw. Erfassung der Eigenschaften des durch die Vorrichtung strömenden flüssigen Mediums gewährleistet ist. Die Messung erfasst die Eigenschaften des Mediums, das den Messraum füllt und das infolge einer Strömung durch den Messraum ständig (kontinuierlich oder in kurzen Zeitabständen) erneuert wird. mit einer sehr geringen Störanfälligkeit, wobei insbesondere ein Einfluss durch Luftblasen (oder allgemein Gasblasen) in der Vorrichtung erheblich vermindert werden kann. Mit der Anordnung der Sensorvorrichtung in dem Rohrleitungssystem und nicht in einem Tank oder Behälter treten keine Störungen der Erfassung durch die Vorrichtung auf, wenn zusätzlich und gleichzeitig beispielsweise mittels Ultraschallsignalen eine Füllstandmessung durchgeführt werden soll.

Treten auch im normalen (störungsfreien) Betrieb kaum vermeidbare Gasblasen in der Vorrichtung und insbesondere in dem Messraum auf, werden in Verbindung mit den Gasblasen mehrfache Grenzflächen zwischen unterschiedlich dichten Medien gebildet, so dass die Erfassung mittels Ultraschallsignalen durch mehrfache Reflexionen und Streuung gestört und damit die Genauigkeit der Erfassung vermindert wird. Dies betrifft auch Gas- oder Luftblasen, die in den Zuleitungsrohren des Rohrleitungssystems vorliegen, da in Verbindung mit der Strömung des flüssigen Mediums die Gasblasen auch in die stromauf liegende Sensorvorrichtung gelangen können. Dies kann insbesondere der Fall sein, wenn ein mit dem Rohrleitungssystem in Verbindung stehender Tank oder Behälter entleert oder neu gefüllt und die Strömung unterbrochen wurde. Mit der erfindungsgemäßen Anordnung kann somit eine effektive Entlüftungswirkung innerhalb der Vorrichtung erzielt werden, wobei sich immer wieder bildende Gas - oder Luftblasen in Verbindung mit der Strömung des flüssigen Mediums schnell beseitigt oder zumindest aus den Ultraschallwegen entfernt werden.

Die konstruktive Auslegung der Vorrichtung und insbesondere der Ausgestaltung des Messraums führen zu einer erheblichen Verminderung der störenden Einflüsse, so dass auch über einen längeren Zeitraum und mit unterschiedlichen flüssigen Medien eine verlässliche Erfassung durchgeführt werden kann. Störende Gas- oder Luftblasen können sich nicht im Bereich des Ultraschallmoduls anlagern und die Ausbreitung der Ultraschallsignale beeinträchtigen. In Verbindung mit der verlässlichen und genauen Erfassung kann auch bei erheblichen Abweichungen der Messergebnisse auf eine allgemeine Störung der Strömung des flüssigen Mediums geschlossen werden. Erfassungs- oder Messergebnisse können hinsichtlich der Eigenschaften des Mediums mit gespeicherten Werten verglichen werden, so dass abweichende Eigenschaften in Verbindung mit erwünschten oder unerwünschten Änderungen sicher erfasst werden können.

Mit der kompakten Anordnung ist die Vorrichtung auf einfache Weise in ein bestehendes Rohrleitungssystem einzufügen, so dass das in dem Rohrleitungssystem strömende flüssige und zu erfassende Medium die Vorrichtung durchströmt. Mit einem geringen Aufwand kann eine verlässliche Erfassung durchgeführt werden. Der vergleichsweise einfache Aufbau ermöglicht eine kostengünstige Herstellung beispielsweise im Bereich der Kfz-Technik mit hohen Stückzahlen. Eine Anwendung im Bereich der Kfz-Technik ist die Erfassung der Eigenschaften (beispielsweise der Konzentration und/oder Zusammensetzung) einer wässrigen Harnstofflösung, die verwendet wird zur Abgasreinigung von Diesel-Brennkraftmaschinen.

Weitere Ausgestaltungen der vorliegenden Erfindung sind in den abhängigen Patentansprüchen dargestellt.

Bei der Vorrichtung in Verbindung mit dem ersten Ausführungsbeispiel kann Öffnung des ersten Anschlusselements eine Einströmöffnung in den Messraum und die Öffnung des zweiten Anschlusselements eine Ausströmöffnung für das flüssige Medium aus dem Messraum sein, und kann das Ultraschallmodul benachbart zur Öffnung des ersten Anschlusselements und außerhalb des Messraums angeordnet sein.

Zwischen den jeweiligen Bereichen der Anschlusselemente parallel zur Erstreckungsrichtung des Messraums und dem benachbart angeordneten Teil der Messraumwand kann ein Zwischenraum gebildet werden, über den das flüssige Medium und in Verbindung mit den jeweiligen Öffnungen in den Messraum einströmt und aus diesem ausströmt.

Bei der Vorrichtung in Verbindung mit dem zweiten Ausführungsbeispiel kann die Öffnung des ersten Anschlusselements eine Einströmöffnung in den Messraum und die Öffnung des zweiten Anschlusselements eine Ausströmöffnung für das flüssige Medium aus dem Messraum sein, und das Ultraschallmodul kann in dem ersten Anschlusselement gegenüber der Reflexionsfläche des zweiten Anschlusselements angeordnet sein.

Es kann zwischen den jeweiligen Bereichen der Anschlusselemente und dem benachbart angeordneten Teil der Messraumwand ein Zwischenraum gebildet werden, über den das flüssige Medium von den jeweiligen Öffnungen in den Messraum einströmt und aus diesem ausströmt.

Es können der Messraum eine Erstreckungsrichtung und die beiden Anschlusselemente eine jeweilige Längsachse aufweisen, und es können die Erstreckungsrichtung und die Längsachsen zueinander parallel sein.

Des Weiteren kann der Messraum eine Erstreckungsrichtung aufweisen, und kann die Erstreckungsrichtung zu einer Bezugsrichtung einen vorbestimmten Winkel derart aufweisen, dass die zweite Öffnung des zweiten Anschlusselements höher angeordnet ist als die erste Öffnung des ersten Anschlusselements.

Die Erfindung wird nachstehend anhand von Ausführungsbeispielen unter Bezugnahme auf die Figuren näher beschrieben. Es zeigen:
Fig. 1 eine schematische Darstellung der Sensorvorrichtung, die innerhalb eines Rohrleitungssystems einer Abgasreinigungseinrichtung angeordnet ist,
Fig. 2 die äußere Form der Sensorvorrichtung zum Einsetzen in das Rohrleitungssystem,
Fig. 3 eine schematische und vereinfachte Darstellung der Wirkungsweise und des Aufbaus der Sensorvorrichtung gemäß einem ersten Ausführungsbeispiel der Erfindung,
Fig. 4 eine Schnittansicht der Sensorvorrichtung gemäß Fig. 2 entlang der Schnittlinie gemäß A-A mit der Darstellung des inneren Aufbaus der Sensorvorrichtung sowie der Strömungswege des fluiden Mediums in der Sensorvorrichtung,
Fig. 5 eine Schnittdarstellung der Sensorvorrichtung gemäß Fig. 2 entlang der Schnittlinie A-A mit der Veranschaulichung des inneren Aufbaus sowie der Wege der Ultraschallsignale innerhalb eines Messraums,
Fig. 6 eine perspektivische Darstellung eines ersten Anschlusselements der Sensorvorrichtung gemäß dem ersten Ausführungsbeispiel einschließlich einer ersten Ultraschall-Reflexionsfläche,
Fig. 7 eine perspektivische Darstellung eines zweiten Anschlusselements der Sensorvorrichtung gemäß dem ersten Ausführungsbeispiel einschließlich einer zweiten Ultraschall-Reflexionsfläche,
Fig. 8 eine Schnittdarstellung des ersten Anschlusselements gemäß Fig. 6 entlang der Schnittlinie B-B,
Fig. 9 eine Schnittdarstellung des zweiten Anschlusselements gemäß Fig. 7 entlang der Schnittlinie C-C,
Fig. 10A eine Draufsicht auf die zweite Reflexionsfläche des zweiten Anschlusselements der Sensorvorrichtung gemäß dem ersten Ausführungsbeispiel, Fig. 10B eine Schnittansicht eines Teils des zweiten Anschlusselements mit einer nicht beanspruchten abgewandelten Ausführung, und Fig. 10C eine Schnittansicht eines Teils des ersten Anschlusselements der nicht beanspruchten abgewandelten Ausführung,
Fig. 11 eine Schnittdarstellung der Sensorvorrichtung gemäß einem zweiten Ausführungsbeispiel der Erfindung, und
Fig. 12 eine Schnittdarstellung der Sensorvorrichtung gemäß einer nicht beanspruchten Ausführungsform.

### - Erstes Ausführungsbeispiel

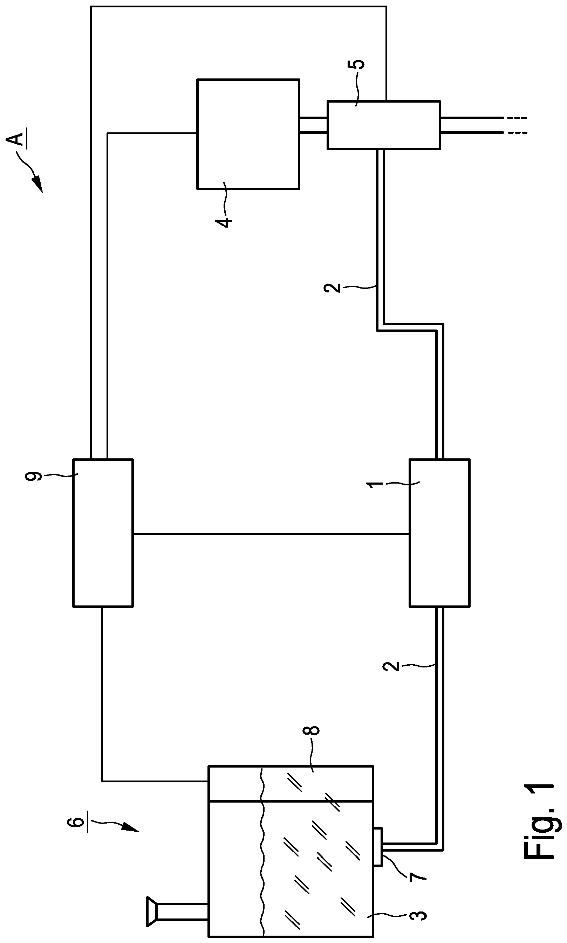

Der Aufbau und die Wirkungsweise der erfindungsgemäßen Sensorvorrichtung gemäß einem ersten Ausführungsbeispiel werden nachstehend in Verbindung mit den Figuren 1 bis 3 beschrieben.

Fig. 1 zeigt die Sensorvorrichtung 1, die in ein Rohrleitungssystem 2 eingesetzt ist und von einem zu erfassenden fluiden bzw. hier einem flüssigen Medium 3 durchströmt wird.

Die Beschreibung des Aufbaus und der Wirkungsweise der Sensorvorrichtung 1 erfolgt hier am Beispiel der Anordnung der Sensorvorrichtung 1 als Teil einer Abgasreinigungsanlage für eine industrielle Anwendung oder in einem Kraftfahrzeug, wobei eine Abgasquelle, beispielsweise in Form einer Brennkraftmaschine 4 vorgesehen ist und wobei die Abgase in eine Abgasanlage 5 geleitet werden. Das flüssige Medium 3, das beispielsweise in Verbindung mit der Anwendung zur Abgasreinigung einer Diesel-Brennkraftmaschine eine wässrige Harnstofflösung sein kann, befindet sich in einem Tank oder Behälter 6, und wird mittels des Rohrleitungssystems 2 der Abgasanlage 5 der Brennkraftmaschine 4 zugeführt. In das Rohrleitungssystem 2 ist die Sensorvorrichtung 1 eingesetzt, so dass das vom Behälter 6 mittels einer Entnahmeeinrichtung 7 entnommene flüssige Medium 3 die Sensorvorrichtung 1 durchströmt und in vorbestimmter Menge in Abhängigkeit von dem Betrieb der Brennkraftmaschine 4 (Abgasquelle) in die Abgasanlage 5 eingebracht wird. Die vorliegende Erfindung ist jedoch nicht auf die vorstehend beschriebene Anwendung beschränkt. Sie ist vielmehr anwendbar bei einer Vielzahl von Einsatzmöglichkeiten, bei denen ein flüssiges Medium hinsichtlich seiner Eigenschaften auf einfache Weise und mit einer kompakten Vorrichtung zu erfassen ist.

Der Behälter 6 kann einen Füllstandsensor 8 aufweisen, mittels dessen der aktuelle und betriebsabhängig schwankende Füllstand des flüssigen Mediums 3 im Behälter 6 bestimmt werden kann.

Eine zentrale Steuerungseinrichtung 9 dient zur Steuerung der gesamten Abläufe und steht mit dem Behälter 6 hinsichtlich der Steuerung der Entnahmeeinrichtung 7 und des Füllstandsensors 8, der Sensorvorrichtung 1 sowie der Brennkraftmaschine 4 mit diesen Komponenten in Verbindung. Ferner erhält die zentrale Steuerungseinrichtung 9 Information hinsichtlich des aktuellen Betriebs der Abgasanlage 5, wobei in Abhängigkeit von der Information die jeweils in die Abgasanlage 5 einzubringende Menge des flüssigen Mediums zur Abgasreinigung bestimmt wird.

Die Sensorvorrichtung 1 kann somit beispielsweise gemäß Fig. 1 einen Teil einer Abgasreinigungsanlage darstellen, wobei diese Abgasreinigungsanlage in einem Kraftfahrzeug oder in jeder anderen industriellen Einrichtung mit einer Abgasquelle ähnlich der Brennkraftmaschine 4 angewendet werden kann. Die Sensorvorrichtung 1 wird während des gesamten Betriebs der Abgasanlage A von dem zu erfassenden flüssigen Medium 3 durchströmt und bestimmt in Abhängigkeit von einer entsprechenden Steuerung durch die zentrale Steuerungseinrichtung 9 kontinuierlich oder in vorbestimmten Zeitabständen die Eigenschaften des flüssigen Mediums 3, das bei einer Diesel-Brennkraftmaschine eine wässrige Harnstofflösung sein kann, wobei jeweilige Erfassungssignale der zentralen Steuerungseinrichtung 9 zugeführt werden.

Entsprechen die von der Sensorvorrichtung 1 erfassten Daten bezüglich der Eigenschaften des flüssigen Mediums 3 zuvor bestimmten und gespeicherten Daten (beispielsweise Referenz-oder Bezugsdaten) oder liegen die Daten in einem vorbestimmten Bereich (Toleranzbereich oder zulässiger Bereich), kann der Betrieb der Abgasreinigungsanlage A fortgesetzt werden. Liegen die durch die Sensorvorrichtung 1 erfassten Werte bezüglich der Eigenschaften des flüssigen Mediums 3 geringfügig oder erheblich außerhalb des zulässigen Bereichs, kann ein Alarmsignal ausgegeben werden und/oder es kann die Anlage in einen Notbetrieb versetzt oder stillgelegt werden.

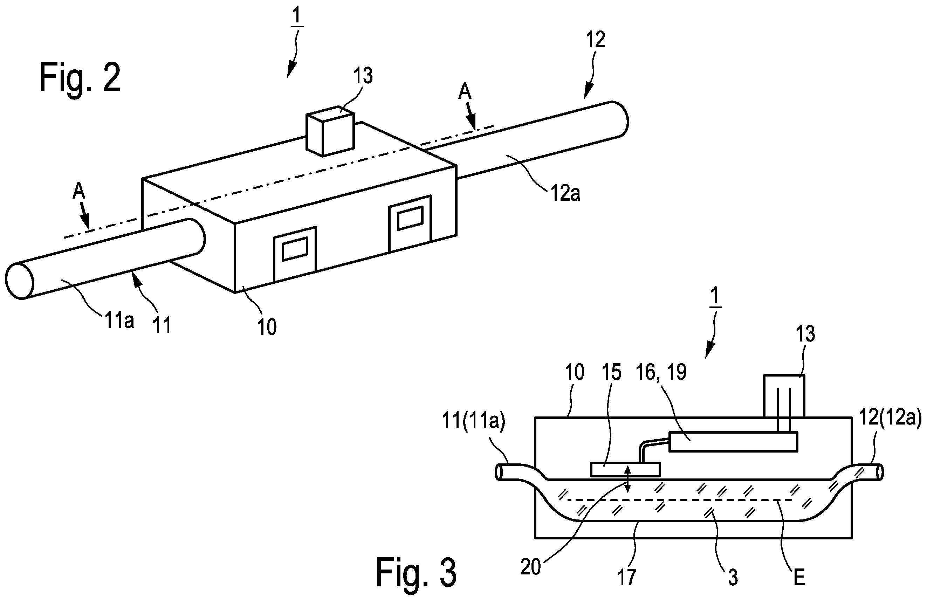

Fig. 2 zeigt ein äußeres Erscheinungsbild der Sensorvorrichtung 1 gemäß der vorliegenden Erfindung, wobei die Sensorvorrichtung 1 ein Gehäuse 10 aufweist, aus dem ein erstes Anschlusselement 11 und ein zweites Anschlusselement 12 herausragt. Beide Anschlusselemente 11 und 12 dienen dem Anschluss an bestehende Rohrleitungen (beispielsweise das Rohrleitungssystem 2) oder elastische Schläuche (vollständig oder zumindest teilweise) und weisen dazu jeweilige rohrförmige Enden 11a und 12a auf, so dass der Sensorvorrichtung 1 auf diese Weise das zu erfassende flüssige Medium 3 zugeführt wird und die Sensorvorrichtung 1 durchströmt.

Das Gehäuse 10 kann hierbei mehrteilig ausgeführt werden und umschließt die beiden zueinander beabstandeten Anschlusselemente 11 und 12 in entsprechend abgedichteter Weise und mit der entsprechenden mechanischen Stabilität.

Gemäß Fig. 2 ist am Gehäuse 10 ebenfalls eine Steckereinrichtung 13 vorgesehen, so dass die Sensorvorrichtung 1 mit beispielsweise der zentralen Steuerungseinrichtung 9 einerseits zur Versorgung mit elektrischer Leistung und andererseits zur bidirektionalen Übertragung von Daten verbunden werden kann. Weitere Einzelheiten des Gehäuses 10 sind zur Vereinfachung der Darstellung weggelassen.

Fig. 3 zeigt eine schematische und vereinfachte Darstellung des grundsätzlichen Aufbaus der Sensorvorrichtung 1, wobei das erste und zweite Anschlusselement 11 und 12 innerhalb der Sensorvorrichtung 1 mit einem Messraum 14 verbunden sind bzw. in den Messraum 14 münden. Die beiden Anschlusselemente 11 und 12 sind über den Messraum 14 zueinander beabstandet. In den Anschlusselementen 11 und 12 sowie in dem Messraum 14 befindet sich das zu erfassende flüssige Medium 3. Der Messraum 14 erstreckt sich entlang einer gestrichelten Linie E. Die gestrichelte Linie E stellt für den Messraum 14 eine Längsachse bzw. eine Erstreckungsrichtung dar, die nachstehend und in Verbindung mit weiteren Figuren als Erstreckungsrichtung E des Messraums 14 bezeichnet wird.

Fig. 3 zeigt ferner außerhalb des Messraums 14, aber in unmittelbarer Nachbarschaft zu diesem ein Ultraschallmodul 15, das eine Sendeeinrichtung und eine Empfangseinrichtung für Ultraschallsignale aufweist und das in der Weise angesteuert und angeordnet ist, dass die Ultraschallsignale in den Messraum abgegeben und aus diesem reflektierte Ultraschallsignale empfangen werden können. Das Ultraschallmodul 15 ist mit einer Steuereinheit 16 verbunden, die in der Lage ist, das Ultraschallmodul 15 zum Senden und das Empfangen von Ultraschallsignalen anzusteuern, eine entsprechende elektrische Leistung bereitzustellen und Daten zumindest zeitweilig zu speichern und bei Anschluss an die zentrale Steuerungseinrichtung 9 mittels der Steckereinrichtung 13 Daten und Befehle mit der zentralen Steuerungseinrichtung 9 auszutauschen. Schematisch sind in der Steckereinrichtung 13 zwei Steckkontakte angedeutet. Die Anzahl der Steckkontakte ist von dem Bedarf hinsichtlich der Datenübertragung und der Bereitstellung der elektrischen Leistung abhängig und nicht auf die in der schematischen Darstellung gezeigte Anzahl festgelegt.

Im Einzelnen wird somit auf Befehl bzw. Anweisung der zentralen Steuerungseinrichtung 9 die Steuereinheit 16 in der Sensorvorrichtung 1 tätig und veranlasst das Ultraschallmodul 15 zum Senden und Empfangen von Ultraschallsignalen in Verbindung mit dem Messraum 14, der vorzugsweise vollständig mit dem flüssigen Medium 3 gefüllt ist, dessen Eigenschaften kontinuierlich oder zu vorbestimmten Zeiten ermittelt werden. Zu diesen Zeiten wird die Steuereinheit 16 das Ultraschallmodul 15 in vorbestimmter entsprechend ansteuern. Innerhalb des Gehäuses 10 sind somit das Ultraschallmodul 15 mit Sender und Empfänger für Ultraschallsignale, die Enden der Anschlusselemente 11 und 12, der Messraum 14, die Steuereinheit 16 sowie die Steckereinrichtung 13 (von außen zugänglich) angeordnet. Das für die genannten Komponenten gemeinsame Gehäuse 10 kann zur Abdichtung ganz oder zumindest teilweise mittels eines Kunststoffmaterials vergossen werden.

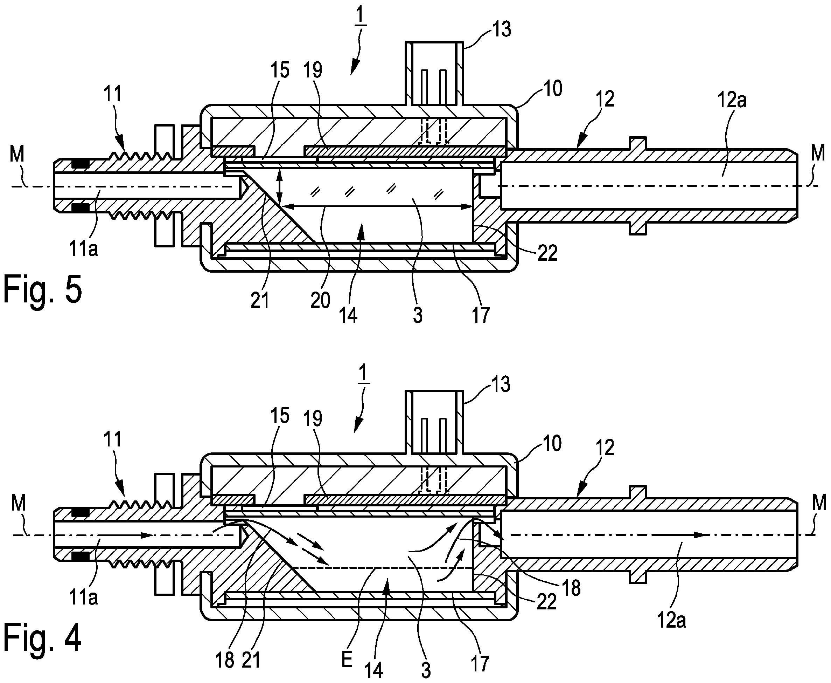

Fig. 4 zeigt eine Schnittansicht der Sensorvorrichtung 1 gemäß Fig. 2 entlang der Schnittlinie A-A.

In das Gehäuse 10 der Sensorvorrichtung 1 ist auf der in der Darstellung linken Seite das erste Anschlusselement 11 eingesetzt, und auf der rechten Seite in Fig. 4 das zweite Anschlusselement 12 eingesetzt. Beide Anschlusselemente 11 und 12 sind einerseits mechanisch im Gehäuse 10 befestigt und andererseits abdichtend mit dem Messraum 14 verbunden, der von einer Messraumwand 17 umgeben ist, die abgedichtet an den ersten und zweiten Anschlusselementen 11 und 12 anliegt. Vorzugsweise ragen die beiden Anschlusselemente 11 und 12 mit ihrem jeweiligen dem Messraum 14 zugewandten Ende um eine vorbestimmte Länge in den Messraum 14 hinein, damit die erforderliche Abdichtung und mechanische Befestigung (Stabilität) erreicht wird.

Der Messraum 14 weist in der zur Papierebene senkrechten Ebene und damit auch senkrecht zur Erstreckungsrichtung E (Figuren 3 und 4) einen quadratischen, rechteckigen, ovalen, kreisrunden oder beliebigen Querschnitt auf, so dass beispielsweise in Verbindung mit einem kreisrunden oder annähernd kreisrunden Querschnitt (Querschnittsfläche) ein etwa zylindrischer Hohlkörper entsteht, der sich zwischen dem ersten und zweiten Anschlusselement 11 und 12 erstreckt (entlang Längsachse oder der Erstreckungsrichtung E) und durch diese Anschlusselemente 11 und 12 abgeschlossen wird. Hierzu sind die beiden Anschlusselemente 11 und 12 hinsichtlich ihrer Ausgestaltung in dem Bereich, der nach dem Zusammensetzen der Komponenten innerhalb der Messraumwand 17 liegt, an die Querschnittsfläche des Messraums 14 angepasst, damit ein dichter Sitz erreicht werden kann.

Beide Anschlusselemente 11 und 12 weisen auf der Seite in Richtung des Messraums 14 eine jeweilige Öffnung auf, die nachstehend im Einzelnen beschrieben wird. Die Messraumwand 17 kann in Abhängigkeit von der Art der Querschnittsfläche (die sich auch entlang der Erstreckungsrichtung E ändern kann) durch ein Hohlprofil gebildet werden, das zu den Endbereichen der beiden Anschlusselemente 11 und 12 reicht und an diesen zumindest teilweise anliegt bzw. diese berührt.

Ist die Sensorvorrichtung 1 mittels der jeweiligen Rohrenden 11a und 12a des ersten und zweiten Anschlusselements 11 und 12 mit einem Rohrleitungssystem 2 verbunden, strömt vorzugsweise über das erste Anschlusselement 11 das flüssige Medium 3 in den Messraum 14 und strömt über das zweite Anschlusselement 12 (in Fig. 4 auf der rechten Seite der Darstellung) aus dem Messraum 14 heraus in das angeschlossene Rohrleitungssystem 2. In Fig. 4 ist die Strömung des flüssigen Mediums 3 in den Messraum 14 und aus diesem heraus mittels entsprechender Pfeile 18 angedeutet.

Oberhalb und außerhalb des Messraums 14 ist in der Darstellung in Fig. 4 das Ultraschallmodul 15 gezeigt, und Bezugszeichen 19 bezeichnet eine Leiterplatte oder Platine, die elektrisch und bei Bedarf auch mechanisch mit dem Ultraschallmodul 15 verbunden ist und auf der die Steuereinheit 16 ausgebildet ist. In Verbindung mit der Steckereinrichtung 13 sind schematisch zwei Steckkontakte zur Übertragung von elektrischer Leistung und Daten angedeutet.

Fig. 5 zeigt dieselbe Anordnung, wie sie in Fig. 4 veranschaulicht ist, mit denselben Bezugszeichen. In der zur Fig. 4 gleichartigen Schnittdarstellung von Fig. 5 ist der Messraum 14 ebenfalls mit dem zu überprüfenden flüssigen Medium 3 gefüllt. Zur Erfassung der Eigenschaften des flüssigen Mediums 3 sendet das Ultraschallmodul 15 entsprechende Ultraschallsignale (Ultraschallwellen) durch die Messraumwand 17 (durch den oberen Teil derselben gemäß Fig. 5), und es breiten sich die Ultraschallsignale in dem Messraum 14 aus. Die Ultraschallsignale sind mit Pfeilen 20 in Fig. 4 bezeichnet. Gemäß der Darstellung in Fig. 5 nehmen die Ultraschallsignale bevorzugt den mittels der Pfeile 20 dargestellten Weg. Es besteht des Weiteren die in Fig. 4 dargestellte bevorzugte Strömungsrichtung (Pfeile 18) des flüssigen Mediums 3.

Im Einzelnen werden die Ultraschallsignale in Form von Sendesignalen vom Ultraschallmodul 15 gemäß der Darstellung in Fig. 5 nach unten abgestrahlt und treffen auf eine erste Reflexionsfläche 21, die schräg zur Ausbreitungsrichtung der Ultraschallsignale angeordnet und an einer im Inneren des Messraums 14 liegenden Stirnseite des ersten Anschlusselements 11 ausgebildet ist. Die Ultraschallsignale des Ultraschallmoduls 15 werden durch die erste Reflexionsfläche 21 gemäß Fig. 5 nach rechts reflektiert und gelangen nach Durchlaufen der Längsausdehnung (Erstreckungsrichtung E) des Messraums 14 auf eine zweite Reflexionsfläche 22, die in zur Ausbreitungsrichtung der Ultraschallsignale und ebenfalls zur Erstreckungsrichtung E des Messraums 14 im Wesentlichen senkrecht steht. Die zweite Reflexionsfläche 22 ist an dem zweiten Anschlusselement 12 ausgebildet und stellt eine im Inneren des Messraums 14 liegende Stirnfläche des zweiten Anschlusselements 12 dar. Mittels der ersten Reflexionsfläche werden somit die Ultraschallsignale etwa um 90° (etwa rechtwinkelig) abgelenkt, ungeachtet dessen, ob sie direkt durch das Ultraschallmodul 15 in das flüssige Medium 3 eingestrahlt oder an der zweiten Reflexionsfläche 22 reflektiert wurden.

Entsprechend dieser Anordnung wird somit der Messraum 14 durch die Messraumwand 17 begrenzt, und es werden die jeweiligen Öffnungen am Ende des Messraums 14 durch das erste und zweite Anschlusselement 11 und 12 und im Wesentlichen durch die erste und zweite Reflexionsfläche 21 und 22 abgeschlossen. Die beiden Reflexionsflächen 21 und 22 sind in Form überwiegend glatter Flächen gebildet, so dass mit geringer Streuung und Dämpfung die Ultraschallsignale reflektiert werden können. Die zweite Reflexionsfläche 22 (auf der rechten Seite in den Figuren 4 und 5) bewirkt eine Totalreflexion der den Messraum 14 durchlaufenden und an der ersten Reflexionsfläche 21 reflektierten Ultraschallsignale, worauf die von der zweiten Reflexionsfläche 22 reflektierten Ultraschallsignale erneut an der ersten Reflexionsfläche 21 reflektiert und zu dem Ultraschallmodul 15 zurückgeleitet werden. Im Ultraschallmodul 15 werden die auf ihrem Weg entsprechend den Pfeilen 20 drei Mal reflektierten Ultraschallsignale empfangen und hinsichtlich ihrer Laufzeit durch den Messraum 14 und durch das flüssige Medium 3 ausgewertet.

Die Ultraschallsignale durchlaufen den Messraum 14 vollständig innerhalb des flüssigen Mediums 3, so dass die sich ergebenden Laufzeiten der Ultraschallsignale ein Maß für die Eigenschaften des flüssigen Mediums 3 darstellen. Insbesondere können Eigenschaften hinsichtlich einer Konzentration einer Lösung, der Anwesenheit von erwünschten oder unerwünschten Fremdstoffen und der allgemeinen Dichte des flüssigen Mediums 3 ermittelt werden. Da die Eigenschaften des flüssigen Mediums 3 in Abhängigkeit von seiner Art und chemischen und physikalischen Zusammensetzung temperaturabhängig sein können, ist zumindest eine (in den Figuren nicht gezeigte) Temperaturerfassungseinrichtung vorgesehen. Es kann somit bei der Auswertung der Ultraschallsignale die jeweils herrschende Temperatur im Messraum 14 (bzw. des flüssigen Mediums 3) ermittelt und berücksichtigt werden.

Die Auswertung kann hierbei mittels einer EDV-Anlage gesteuert werden, die beispielsweise in Form der zentralen Steuerungseinrichtung 9 vorliegen kann. Ferner kann die Steuereinheit 16, die in der Sensorvorrichtung 1 angeordnet ist, bereits zumindest teilweise eine Auswertung oder Aufbereitung der vom Ultraschallmodul 15 abgegebenen Erfassungssignale vornehmen. Es können bei der Auswertung auch Kennfelder und/oder zuvor gespeicherte Referenzsignale hinsichtlich der Eigenschaften des zu erfassenden flüssigen Mediums 3 herangezogen werden. Hierbei können Vergleiche gebildet werden, und es können in Abhängigkeit von auftretenden Abweichungen und dem Grad der Abweichungen Maßnahmen ergriffen werden, wenn davon ausgegangen wird, dass die Sensorvorrichtung 1 innerhalb eines Prozesses zur Überwachung eines flüssigen Mediums 3 eingesetzt wird. Zumindest kann einem Benutzer oder Betreuer der gesamten Anlage ein Hinweis hinsichtlich der geänderten Eigenschaften des flüssigen Mediums 3 gegeben werden oder es kann ein Alarm ausgelöst werden.

Die Messung bzw. Erfassung der Eigenschaften des flüssigen Mediums 3 im Messraum 14 mittels der Ultraschallsignale des Ultraschallmoduls 15 ist umso genauer, je gleichmäßiger das Volumen des Messraums 14 mit dem flüssigen Medium 3 gefüllt ist. Ist der Messraum 14 nicht vollständig gefüllt oder treten beispielsweise Gasblasen oder Luftblasen auf, entstehen auf den durch die Pfeile 20 angedeuteten Wegen der Ultraschallsignale innerhalb des Messraums 14 Grenzflächen zwischen unterschiedlich dichten Medien, so dass unerwünschte und störende Reflexionen auftreten und damit die Auswertbarkeit der Ultraschallsignale verschlechtert wird. Die Genauigkeit der Erfassung wird daher ebenfalls verschlechtert.

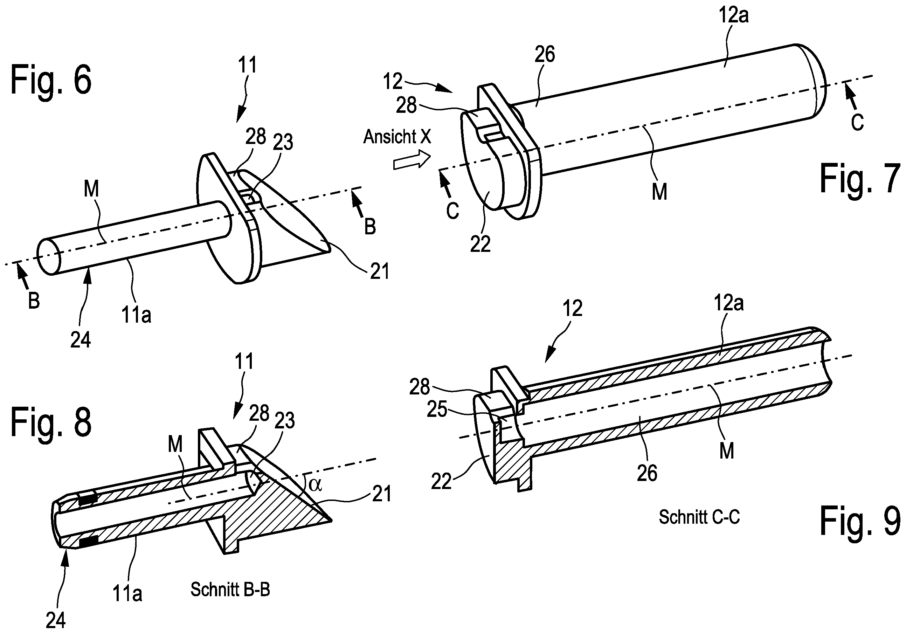

Im Zusammenhang mit der Verbesserung der Genauigkeit der Erfassung zeigen die Figuren 6 bis 9 in verschiedenen perspektivischen Ansichten und Schnittansichten (losgelöst von dem Messraum 14) die beiden Anschlusselemente 11 und 12, wobei zur besseren Darstellung der Einzelheiten die Messraumwand 17 weggelassen ist, die Anschlusselemente 11 und 12 jedoch in der entsprechenden Position relativ zueinander (d. h. lagerichtig zueinander und zu dem nicht dargestellten Messraum 14) gezeigt sind, wie es in den Figuren 4 und 5 angedeutet ist.

Die Figuren 6 und 7 zeigen eine perspektivische Ansicht des jeweiligen ersten und zweiten Anschlusselements 11 und 12, und es zeigen die Figuren 8 und 9 eine jeweilige Schnittansicht der beiden Anschlusselemente 11 und 12 gemäß vorbestimmter Schnittlinien. In den Figuren zeigt eine strichpunktierte Linie M eine gedachte Längsachse als Erstreckungsrichtung des jeweiligen ersten und zweiten Anschlusselements 11 und 12. Demgegenüber bezeichnet die gestrichelte Linie E die Erstreckungsrichtung E des Messraums 14, wobei die Erstreckungsrichtung E des Messraums 14 im Wesentlichen (d. h. bis auf unvermeidbare Toleranzen) bei der in den Figuren 5 bis 9 gezeigten Anordnung parallel (fluchtend) zur Längsachse M des jeweiligen Anschlusselements 11 und 12 ist.

Fig. 6 zeigt in der perspektivischen Darstellung die erste Reflexionsfläche 21 als schräge Fläche, und Fig. 7 zeigt die zweite Reflexionsfläche 22 als ebene Fläche im Wesentlichen senkrecht zur Ausbreitungsrichtung (Erstreckungsrichtung E des Messraums 14) der Ultraschallsignale und der Längsausdehnung des (in den Figuren 6 und 9 nicht gezeigten) Messraums 14 in Verbindung mit der Messraumwand 17.

In der Schnittdarstellung gemäß Fig. 8 ist ein Winkel α eingezeichnet, den die schräge erste Reflexionsfläche 21 gegenüber beispielsweise der in Fig. 8 gezeigten Mittellinie M (entsprechend der Schnittlinie B-B von Fig. 6) hinsichtlich ihrer Lage bezeichnet (Reflexionsflächenwinkel). Der Winkel kann bevorzugt etwa 45° betragen. Die jeweiligen Reflexionsflächen 21 und 22 weisen eine glatte Oberfläche mit geringer Rauheit auf, und es ist ferner möglich, die jeweiligen Reflexionsflächen 21 und 22 des ersten und zweiten Anschlusselements 11 und 12 jeweils mit einem günstigen Material, wie beispielsweise einem Metall, zu beschichten. In jedem Fall ist das Material der beiden Anschlusselemente 11 und 12 und gegebenenfalls das Material einer Beschichtung auf den beiden Reflexionsflächen 21 und 22 beständig gegenüber den im Messraum 14 befindlichen flüssigen Medien 3 bzw. ist in Bezug auf entsprechende Eigenschaften an das flüssige Medium 3 angepasst.

Wie es in Fig. 4 und im Zusammenhang mit Fig. 1 angedeutet ist, ermöglicht das erste Anschlusselement 11 den Zufluss (die Einströmung) des flüssigen Mediums 3 in den Messraum 14, und ermöglicht das zweite Anschlusselement 12 den Abfluss (die Ausströmung) des flüssigen Mediums 3 aus dem Messraum 14 zurück in das beispielsweise gemäß Fig. 1 angeschlossene Rohrleitungssystem 2.

Zum Zwecke der Durchleitung des flüssigen Mediums 3 weist das erste Anschlusselement 11 eine erste Öffnung 23 auf, die in Verbindung steht mit einem Rohrteil 24 des ersten Anschlusselements 11. Das flüssige Medium 3 strömt somit von dem Rohrleitungssystem 2 in den ersten Rohrteil 24 des ersten Anschlusselements 11 und tritt über die erste Öffnung 23 in den Messraum 14 der Sensorvorrichtung 1 ein. Die erste Öffnung 23 befindet sich gemäß den Figuren 4, 5, und 8 entsprechend der Darstellung im oberen Bereich der ersten Reflexionsfläche 21.

Das zweite Anschlusselement 12 weist in ähnlicher Weise wie das erste Anschlusselement 11 eine zweite Öffnung 25 auf, durch die das flüssige Medium 3 aus dem Messraum 14 in ein zweites Rohrteil 26 strömt und von da aus zurück in das Rohrleitungssystem 2 gelangt. Die zweite Öffnung 25 befindet sich gemäß der Darstellung in den Figuren 4, 5, 7 und 9 in einem Bereich oberhalb der zweiten Reflexionsfläche 22.

Somit stellt die erste Öffnung 23 im ersten Anschlusselement 11 eine Zulauföffnung bzw. Einströmöffnung dar, und es stellt die zweite Öffnung 25 im zweiten Anschlusselement eine Ablauföffnung bzw. Ausströmöffnung bezüglich des Volumens des Messraums 14 und des strömenden flüssigen Mediums 3 dar.

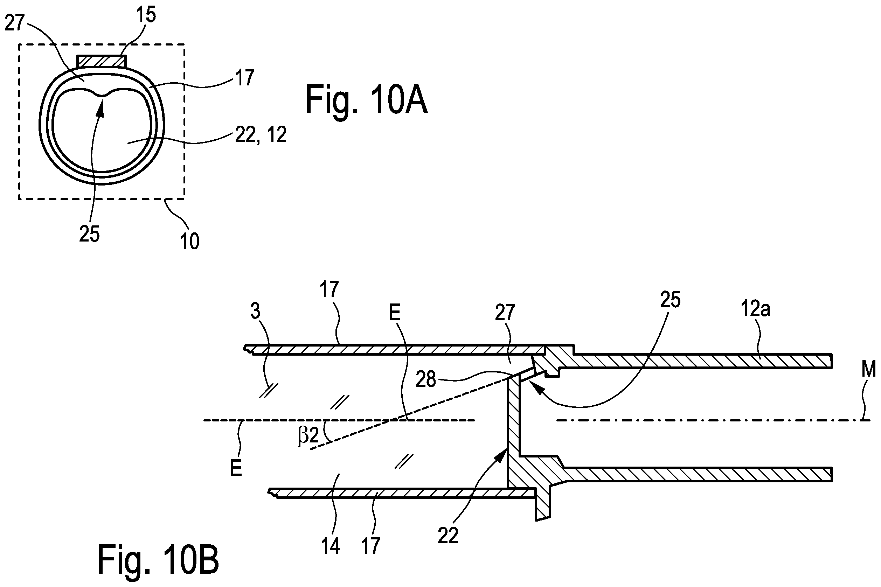

In diesem Zusammenhang zeigt Fig. 10A eine Ansicht der zweiten Reflexionsfläche 22 des zweiten Anschlusselements 12 aus der Sicht entlang der Erstreckungsrichtung E (Draufsicht auf die zweite Reflexionsfläche 22, Ansicht X gemäß Pfeil in Fig. 7). In Verbindung mit den Fig. 7 und 9 ist gezeigt, dass über der zweiten Reflexionsfläche 22 die zweite Öffnung 25 (Ausströmöffnung) in einer Ebene angeordnet ist, die im Wesentlichen parallel zur Längsachse M verläuft und etwa senkrecht auf der zweiten Reflexionsfläche 22 steht. Die zweite Öffnung 25 befindet sich somit in einem Bereich des zweiten Anschlusselements 12, der beispielsweise in Form eines ungefähren Kreissegments oder Kreisabschnitts oder Kreisringausschnitts gebildet ist (sofern die Querschnittsfläche des Messraums 14 beispielsweise als annähernd kreisförmig angenommen wird) und wobei über der zweiten Öffnung 25 ein Zwischenraum 27 gebildet wird, über den das flüssige Medium 3 in die zweite Öffnung 25 und in das angeschlossene Rohrleitungssystem 2 strömt. Bezüglich dieser Darstellung wird auf die Schnittansicht von Fig. 9 verwiesen.

Im Unterschied zur Darstellung in Fig. 9 zeigt Fig. 10B eine nicht beanspruchte Ausführung und speziell die Ausbildung der zweiten Öffnung 25 des zweiten Anschlusselements 12 entsprechend einem zweiten Winkel β2, der beispielsweise im Bereich von 0° bis etwa 50° relativ zur Erstreckungsrichtung E verläuft. Zwischen der zweiten Öffnung 25 und der Messraumwand 17 ist der Zwischenraum 27 ausgebildet. Das flüssige Medium 3 strömt somit in der Darstellung der nicht beanspruchten Ausführung gemäß Fig. 10B oberhalb der zweiten Reflexionsfläche 22 entlang einer kurzen schrägen Ebene 28 aus dem Messraum 14 zur zweiten Öffnung 25 und von der zweiten Öffnung 25 in das angeschlossene Rohrleitungssystem 2. Die abgewandelte nicht beanspruchte Ausführung der zweiten Öffnung 25 gegenüber der Darstellung in beispielsweise Fig. 9 ist in Fig. 10B veranschaulicht, wobei der zweite Winkel β2 (Neigungswinkel) eingetragen ist.

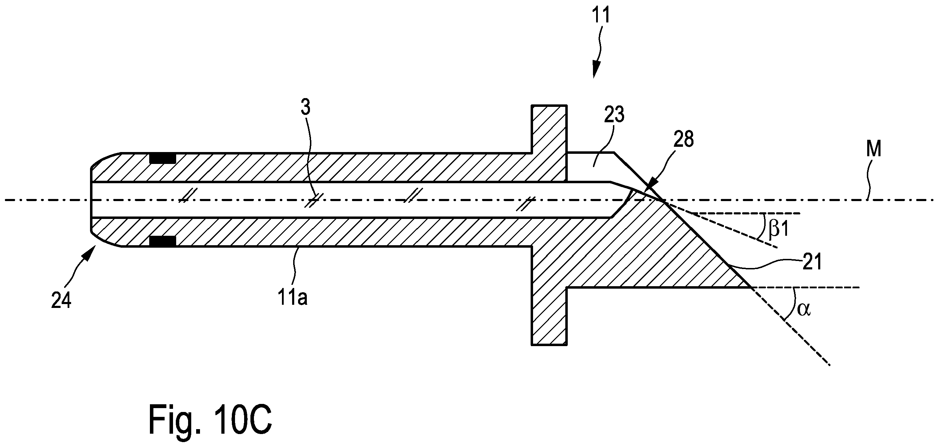

Gemäß den Fig. 4, 5 und 8 ist die erste Öffnung 23 des ersten Anschlusselements 11 ebenfalls benachbart zu einem Zwischenraum 27 über der ersten Reflexionsfläche 21 angeordnet. Fig. 8 zeigt in der Schnittdarstellung diese Anordnung. In gleicher Weise wie bei der zweiten Öffnung 25 des zweiten Anschlusselements 12 ist die erste Öffnung 23 des ersten Anschlusselements 11 in einer entsprechenden Abwandlung in gleichartiger Weise um einen ersten vorbestimmten Winkel β1 (Neigungswinkel) angeordnet. Der erste Winkel β1 des ersten Anschlusselements 11 kann dabei gleich oder unterschiedlich sein zu dem zweiten Winkel β2 des zweiten Anschlusselements 12. In diesem Zusammenhang zeigt Fig. 10C in einer vereinfachten und schematischen Schnittdarstellung ähnlich der Darstellung in den Fig. 6 und 8 die abgewandelte nicht beanspruchte Ausführung der Anordnung der ersten Öffnung 23 des ersten Anschlusselements 11 in Verbindung mit dem ersten Winkel β1. Zur Vereinfachung der Darstellung in Fig. 10C sind beispielsweise die in den Fig. 4 und 5 gezeigten Teile des Messraums 14 sowie des Gehäuses 10 der Sensorvorrichtung 1 weggelassen. Der erste Winkel β1 als Neigungswinkel derjenigen Ebene, in der die erste Öffnung 23 des ersten Anschlusselements 11 angeordnet ist, wird gemäß Fig. 10C relativ zu der jeweiligen Längsachse M der Anschlusselemente 11 und 12 parallel zur Erstreckungsrichtung E bestimmt.

Hinsichtlich der alternativen Anordnung der ersten und zweiten Öffnung 23 und 25 des jeweiligen ersten und zweiten Anschlusselements 11 und 12 der nicht beanspruchten Ausführung gemäß den Fig. 10B und 10C können beide Anschlusselemente 11 und 12 die jeweilige Öffnung 23 oder 25 mit einem ersten oder zweiten Neigungswinkel β1 oder β2 aufweisen, oder es wird lediglich eines der Anschlusselemente 11 oder 12 mit dem entsprechenden jeweiligen ersten oder zweiten Neigungswinkel β1 oder β2 ausgebildet.

Mit der Anordnung der jeweiligen ersten und zweiten Öffnung 23 und 25 in den beiden Anschlusselementen 11 und 12 wird die in Fig. 4 gezeigte Strömung des flüssigen Mediums 3 ausgebildet, wobei einerseits der Messraum 14 zur Durchführung einer verlässlichen und genauen Erfassung vollständig mit dem flüssigen Medium 3 gefüllt ist und andererseits der Messraum 14 über die Strömung des flüssigen Mediums 3 in den und aus dem Messraum 14 kontinuierlich mit frischem Medium 3 aus dem Rohrleitungssystem 2 versorgt wird. Des Weiteren werden die zur Reflexion der Ultraschallsignale erforderlichen Reflexionsflächen 21 und 22 durch die vorstehend beschriebene Anordnung der Öffnungen 23 und 25 nicht nachteilig verkleinert, da die Öffnungen 23 und 25 nicht direkt in den Reflexionsflächen 21 und 22 sondern in einem demgegenüber getrennten Bereich bzw. am Rand der jeweiligen Reflexionsflächen 21 und 22 liegen.

Die Wirkungen des Messraums 14 mit dem vorstehend gezeigten Aufbau in Verbindung mit der Ausgestaltung der beiden Anschlusselemente 11 und 12 wird nachstehend beschrieben.

In der Darstellung der Figuren 4 und 5 sowie in den Figuren 6 und 9 sind die jeweiligen Öffnungen 23 und 25 im oberen Teil der der beiden Anschlusselemente 11 und 12 und oberhalb der jeweiligen zugehörigen Reflexionsflächen 21 und 22 angeordnet. Auf diese Weise tritt im Bereich des oberen Teils der Messraumwand 17 und speziell im Messraum 14 unterhalb des Ultraschallmoduls 15 eine starke Strömung innerhalb der Sensorvorrichtung 1 auf, so dass sich in der Strömung des flüssigen Mediums 3 mitgerissene oder gebildete Gas- oder Luftblasen mit großer Wahrscheinlichkeit nicht im Bereich der oberen Messraumwand 17 unterhalb des Ultraschallmoduls 15 (in den Zwischenräumen 27) anlagern können. Vielmehr wird die in diesem Bereich ausgebildete Strömung des flüssigen Mediums 3 eine auch kurzzeitige Anlagerung von Gas- oder Luftblasen verhindern, so dass derartige Blasen mit der Strömung des flüssigen Mediums 3 im Messraum 14 auf kürzestem Weg in der Nähe des oberen Teils der Messraumwand 17 über den Zwischenraum 27 zur zweiten Öffnung 25 (Ausströmöffnung) geleitet werden.

Eine Ansammlung von Luftblasen besonders im Bereich des Ultraschallmoduls 15 kann somit durch die Ausbildung einer erhöhten Fließ- bzw. Strömungsgeschwindigkeit im Bereich der Öffnungen 23 und 25 sowie innerhalb des Messraums 14 unterhalb des Ultraschallmoduls 15 wirksam verhindert werden (Entlüftungswirkung), während gewährleistet ist, dass ohne störende Reflexionen an unerwünschten Grenzflächen eine genaue und verlässliche Erfassung der Eigenschaften des flüssigen Mediums 3 möglich ist. Zur Aufbereitung und Verarbeitung der entsprechenden Erfassungssignale, die vom Ultraschallmodul 15 abgegeben werden, bedarf es somit eines geringeren Aufwands, und es können die Erfassungssignale als ein genaues Maß für die Eigenschaften des flüssigen Mediums 3 direkt zur Interpretation dieser Eigenschaften herangezogen werden. Mit der beschriebenen Anordnung der Öffnungen 23 und 25 können die Reflexionsflächen 21 und 22 maximal ausgebildet werden, so dass eine sichere und annähernd unverfälschte Reflexion der Ultraschallsignale gewährleistet ist.

In Verbindung mit dieser Interpretation besteht die Möglichkeit, bei erheblicher Abweichung der Erfassungsergebnisse von einem zu erwartenden Wert oder Wertebereich für die Eigenschaften des flüssigen Mediums 3 darauf zu schließen, dass beispielsweise in dem Ultraschallmodul 15 oder der Steuereinheit 16 ein Defekt vorliegt, dass das flüssige Medium 3 den Messraum 14 nicht vollständig ausfüllt (unterbrochene Strömung) oder dass tatsächlich die Eigenschaften des flüssigen Mediums 3 entgegen den Erwartungen erheblich von den gewünschten Werten abweichen. Auf einer entsprechenden Anzeigeeinrichtung in Verbindung mit der zentralen Steuerungseinrichtung 9 können diesbezügliche Hinweise gegeben werden.

Die vorliegende Erfindung in Verbindung mit der Sensorvorrichtung 1 ist gemäß der Darstellung in Fig. 1 in das Rohrleitungssystem 2 eingesetzt, so dass die Durchströmung mit dem flüssigen Medium 3 möglich ist. Die vorstehende Darstellung bezieht sich beispielhaft auf die Anwendung in einem Kraftfahrzeug, das mit einer Diesel-Brennkraftmaschine angetrieben wird, und bei der in Verbindung mit einer wässrigen Harnstofflösung (als das flüssige Medium 3) eine verbesserte Abgasreinigung erreicht werden soll. Hierbei ist es wichtig, die Konzentration der wässrigen Harnstofflösung ständig zu überprüfen, da bei einer von gewünschten Werten abweichenden Konzentration die Abgasreinigung verschlechtert wird.

Die vorliegende Erfindung der Sensorvorrichtung 1 zur Erfassung der Eigenschaften eines flüssigen Mediums 3 ist jedoch auf die Anwendung in einem Kraftfahrzeug nicht festgelegt. Es sind vielmehr weitere vielfältige Anwendungen denkbar, beispielsweise in einer industriellen Maschine, in der Treibstoffe, Hilfsstoffe oder Betriebsstoffe hinsichtlich einer gleichbleibenden Qualität oder sich ändernden Eigenschaften überprüft werden müssen. Beispielsweise kann mittels dieses Verfahrens ein Schmieröl überprüft werden, so dass bestimmt werden kann, wann dieses Öl mit seinen Schmiereigenschaften verbraucht ist oder ob (wie bei einem Motorenöl) Fremdstoffe oder Feuchtigkeit die Eigenschaften erheblich verändert haben.

Wird die erfindungsgemäße Sensorvorrichtung 1 in Verbindung mit der Abgasreinigung eines Kraftfahrzeugs mit Diesel-Brennkraftmaschine eingesetzt, kann in der Sensorvorrichtung 1 eine (in den Figuren nicht gezeigte) Heizeinrichtung vorgesehen sein, so dass bei Auftreten tiefer Temperaturen unter -11° C die wässrige Harnstofflösung (oder jedes andere in Bezug auf Einfrieren empfindliche flüssige Medium 3) in vorbestimmter Weise innerhalb der Sensorvorrichtung 1 aufgewärmt werden kann. Über die Steckereinrichtung 13 kann der Heizeinrichtung eine entsprechende elektrische Leistung zugeführt werden. Diese kann bedarfsweise in Verbindung mit dem (nicht gezeigten) Temperatursensor gesteuert oder geregelt werden.

Vorstehend wurde der Messraum 14 als ein Raum beschrieben mit einer Querschnittsfläche (senkrecht zur Längsausdehnung) von quadratischer, rechteckiger, ovaler oder kreisförmiger Form. In Verbindung mit den Figuren 6 bis 9 kann der obere Teil der Messraumwand 17 auch abgeflacht werden, wie es die Konturen der jeweiligen Reflexionsflächen 22 und 23 in den Figuren 6 und 7 sowie speziell in Fig. 10A zeigen. Eine Abflachung der Messraumwand 17 unterhalb des Ultraschallmoduls 15 ist vorteilhaft in Bezug auf die Anordnung des Ultraschallmoduls 15, so dass die entsprechenden Ultraschallsignale mit einer geringsten Störung oder Dämpfung in den Messraum 14 eingebracht werden.

Mit einer gleichmäßigen Strömung des flüssigen Mediums 3 in dem Messraum 14 gemäß der Darstellung in Fig. 4 kann eine Beruhigungskammer für das flüssige Medium 3 durch den Messraum 14 vorliegen. Zur erleichterten Messung können Referenzwerte in der Steuereinheit 16 oder der zentralen Steuerungseinrichtung 9 gespeichert werden. Auf eine Referenzmessung in vorbestimmten Abständen in Verbindung mit dem üblichen Betrieb der Sensorvorrichtung 1 kann verzichtet werden, da bei einem bestimmten zu erwartenden flüssigen Medium 3 auf entsprechende gespeicherte Referenz- oder Vergleichswerte zugegriffen werden kann.

Mit der vorstehend beschriebenen Anordnung der Sensorvorrichtung 1 kann eine Ausführung der Sensorvorrichtung 1 mit geringen Messungen und somit eine kompakte Ausführung erreicht werden, so dass ein vielfältiger Einsatz auch bei kleinem Einbauraum möglich ist. Entsprechend der Darstellung in den Figuren 4 und 5 kann auf einfache Weise eine genaue Messung durchgeführt werden, und es ist durch den vergleichsweise einfachen Aufbau der Sensorvorrichtung 1 eine kostengünstige Herstellung gewährleistet. Ebenfalls ist eine einfache Montage der Sensorvorrichtung 1 in das Rohrleitungssystem 2 möglich, da lediglich Rohr- oder Schlauchanschlüsse vorzusehen sind. Einer Erfassung mittels der Sensorvorrichtung 1 wird somit immer frisches flüssiges Medium 3 zugeführt, und infolge der entsprechenden Strömung im Messraum 14 wird eine Durchmischung erreicht, so dass die Erfassung der Eigenschaften des flüssigen Mediums 3 immer auf der Basis eines aktuellen Zustands des Mediums 3 erfolgt.

Die Sensorvorrichtung 1 kann an unterschiedlichen Stellen innerhalb einer Anlage oder Maschine angeordnet werden, wobei das Einhalten einer bestimmungsgemäßen Einbaulage, beispielsweise gemäß der Darstellung in Fig. 2 erforderlich ist. Die jeweilige Einström- oder Ausströmöffnung von und zum Messraum 14 sind bei der Sensorvorrichtung 1 eindeutig festgelegt. Zumindest kann hinsichtlich der Einbaulage das erste Anschlusselement 11 geringfügig tiefer liegen als das zweite Anschlusselement 12 (Schrägstellung der Vorrichtung).

### - Zweites Ausführungsbeispiel

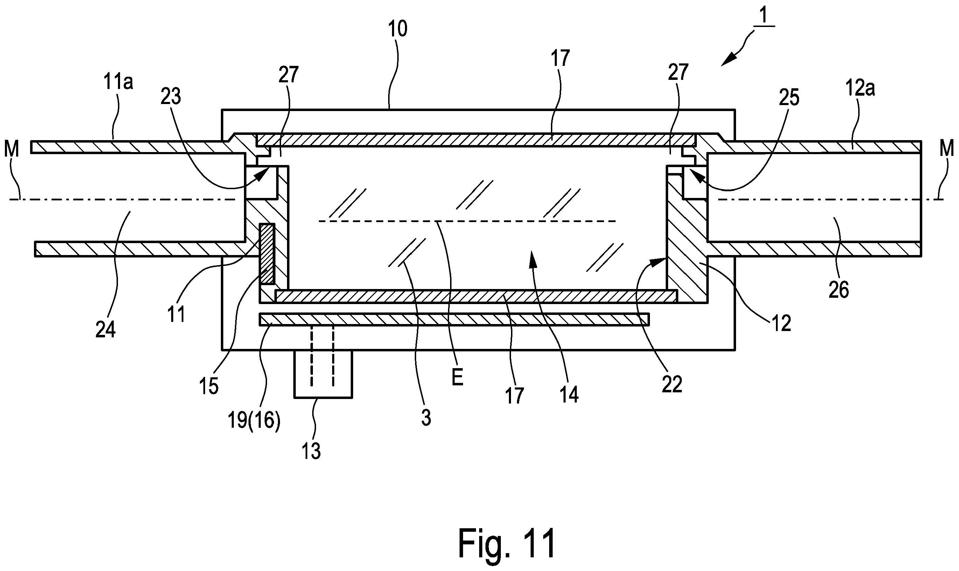

Fig. 11 zeigt ein zweites Ausführungsbeispiel der erfindungsgemäßen Sensorvorrichtung 1. Im Vergleich zu den Figuren 4 und 5 sind gleiche oder gleichartige Teile oder Elemente mit denselben Bezugszeichen versehen.

Die Anordnung der Sensorvorrichtung 1 gemäß dem zweiten Ausführungsbeispiel unterscheidet sich von der Ausführung gemäß dem ersten Ausführungsbeispiel (Figuren 4 und 5) in der Weise, dass lediglich eine Reflexionsfläche entsprechend der zweiten Reflexionsfläche 22 vorgesehen ist, und die relativ zur Erstreckungsrichtung E schräg angeordnete erste Reflexionsfläche 21 entfällt. Gegenüber der zweiten Reflexionsfläche 22 ist in einer im Wesentlichen senkrechten Wand relativ zur Erstreckungsrichtung E des Messraums 14 im ersten Anschlusselement 11 das Ultraschallmodul 15 vorgesehen, wobei die vom Ultraschallmodul 15 gesendeten Ultraschallsignale direkt und ohne Umlenkung durch eine schräge Reflexionsfläche auf die zweite Reflexionsfläche 22 geleitet werden und von dort nach einer Totalreflexion zum Ultraschallmodul 15 zurückkehren. Die zur Ansteuerung des Ultraschallmodells 15 erforderliche Steuereinheit 16 ist in gleicher Weise wie beim ersten Ausführungsbeispiel auf der Leiterplatte 19 (und außerhalb des Messraums 14) ausgebildet, die entsprechend der Darstellung in Fig. 11 nun im Gegensatz zur Anordnung des ersten Ausführungsbeispiels unterhalb des Messraums 14 und damit unterhalb der Messraumwand 17 angeordnet ist. Es kann hierbei die Steckereinrichtung 13 unten im Gehäuse 10 angeordnet sein.

Die beiden Strömungsöffnungen 23 und 25 im jeweiligen ersten und zweiten Anschlusselement 11 und 12 sind in gleicher Weise wie beim ersten Ausführungsbeispiel im oberen Bereich des Messraums 14 unterhalb des oberen Teils der Messraumwand 17 in jeweiligen dem Zwischenraum angeordnet, so dass sich eine im Wesentlichen gleichartige Strömung im Messraum 14 wie bei der Anordnung gemäß dem ersten Ausführungsbeispiel ergibt. Hierbei werden speziell Luft- oder Gasblasen im oberen Bereich des Messraums 14 gehalten bzw. durch die sich ausbildende Strömung (Fließ- bzw. Strömungsgeschwindigkeit) in Richtung der zweiten Öffnung 25 (Ausströmöffnung) geleitet, so dass die Ultraschallsignale nicht durch derartige Gas- und Luftblasen beeinträchtigt werden, da das Ultraschallmodul 15 sich bevorzugt in der Nähe des unteren Bereichs der Messraumwand 17 und damit in einem gewissen Abstand zu der ersten Öffnung 23 (Einströmöffnung für das flüssige Medium 3) befindet.

Mit der Anordnung der Sensorvorrichtung 1 gemäß dem zweiten Ausführungsbeispiel werden dieselben Vorteile erreicht, wie sie in Verbindung mit der Anordnung gemäß dem ersten Ausführungsbeispiel erreicht werden. Der einfache Aufbau in Verbindung mit einer zuverlässigen und störungsarmen Messung oder Erfassung der Eigenschaften des flüssigen Mediums 3 ist gewährleistet. Es kann somit die größtmögliche Fläche der zweiten Reflexionsfläche 22 zur sicheren Funktion der vorliegenden Erfindung beibehalten werden.

Der Einbau der Sensorvorrichtung gemäß dem zweiten Ausführungsbeispiel in das Rohrleitungssystem 2 ist in gleicher Weise wie beim ersten Ausführungsbeispiel möglich. In gleicher Weise erfolgt auch die Weiterleitung von Daten und elektrischen Leistungen über die Steckereinrichtung 13. Ebenso können eine Heizeinrichtung und ein Temperatursensor vorgesehen sein.

### Drittes Ausführungsbeispiel

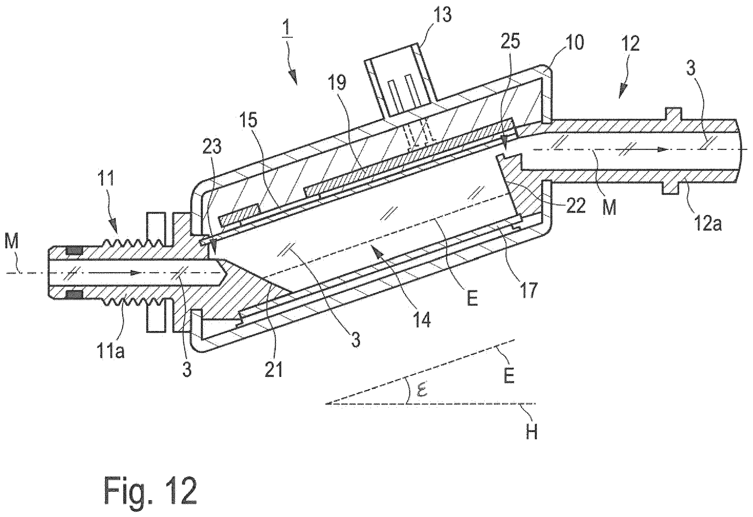

Fig. 12 zeigt die Anordnung der Sensorvorrichtung 1 gemäß einer nicht beanspruchten Ausführungsform.

Der Aufbau der Anordnung der Sensorvorrichtung 1 gemäß dem dritten Ausführungsbeispiel ist gleichartig zu der Anordnung gemäß den Fig. 4 und 5 des ersten Ausführungsbeispiels, wobei gleiche Bezugszeichen gleiche oder gleichartige Komponenten oder Teile bezeichnen.

Im Vergleich zum ersten Ausführungsbeispiel gemäß den Fig. 4 und 5 ist jedoch die Sensorvorrichtung 1 gemäß dem dritten Ausführungsbeispiel in ihrer räumlichen Lage schräg gegenüber einer in Fig. 12 gezeigten Bezugsrichtung, die beispielsweise (und zur Vereinfachung der Darstellung) eine horizontale Richtung (Horizontale H) sein kann, angeordnet. Der Begriff der schrägen Anordnung hinsichtlich der räumlichen Lage bezeichnet hierbei die Anordnung, dass die Erstreckungsrichtung E des Messraums 14 um einen vorbestimmten Winkel ε gegenüber der Horizontalen H (Bezugsrichtung) geneigt ist. Der vorbestimmte Winkel ε wird auch als Raum- oder Lagewinkel der Sensorvorrichtung 1 bezeichnet und ist relativ zur Horizontalen H (Bezugsrichtung) in Fig. 12 dargestellt. Der Raumwinkel ε besteht somit zwischen der zusammen mit der Sensorvorrichtung 1 geneigten Erstreckungsrichtung E des Messraums 14 und der Horizontalen H sowie auch zu den jeweiligen Längsachsen M der Anschlusselemente 11 und 12.

Die Wirkungsweise der Sensorvorrichtung 1 gemäß dem dritten Ausführungsbeispiel ist jedoch gleichartig wie diejenige des ersten Ausführungsbeispiels gemäß den Fig. 4 und 5. Im Einzelnen sendet das Ultraschallmodul 15 entsprechende Ultraschallsignale in den im Allgemeinen mit dem flüssigen Medium 3 vollständig gefüllten Messraum 14 und empfängt entsprechende Reflexionssignale aus dem Messraum 14. Die mit der Anordnung gemäß dem dritten Ausführungsbeispiel erzielbaren Vorteile sind die gleichen wie diejenigen, die in Verbindung mit dem ersten und zweiten Ausführungsbeispiel zu erreichen sind.

Ergänzend wird mittels der schrägen Anordnung (d. h. der schrägen oder geneigten Raumlage) der Sensorvorrichtung 1 und speziell des Messraums 4 (mit seiner Erstreckungsrichtung E) gemäß dem Lagewinkel ε ein Ausspülen von Luft- oder sonstigen Gasblasen aus dem Messraum 14 weiter begünstigt und unterstützt, da die zweite Öffnung 25 des zweiten Anschlusselements 12 (die Ausströmöffnung für das flüssige Medium 3) höher angeordnet ist als die Einströmöffnung in Form der ersten Öffnung 23 des ersten Anschlusselements 11 zur Einströmung des flüssigen Mediums 3 in den Messraum 14. Die Strömungsrichtung des flüssigen Mediums 3 durch die jeweiligen Anschlusselemente 11 und 12 und durch den Messraum 14 ist durch Pfeile in den Anschlusselementen 11 und 12 angedeutet. Die Erstreckungsrichtung bzw. Längsachse M der beiden Anschlusselemente 11 und 12 ist in gleicher Weise wie in den Figuren 4 und 5 angedeutet. Ungeachtet der Neigung der Erstreckungsrichtung E des Messraums 14 um den vorbestimmten Winkel (Lagewinkel) ε können auch die Längsachsen M der Anschlusselemente 11 und 12 um einen weiteren (beispielsweise anderen) Winkel relativ zur Bezugsrichtung H geneigt sein, wobei der weitere Winkel derart ausgewählt ist, dass die zweite Öffnung 25 höher als die erste Öffnung 23 ist.

Es ist zu beachten, dass der Winkel α der schrägen ersten Reflexionsfläche 21 des ersten Anschlusselements 11 relativ zur Erstreckungsrichtung E des Messraums 14 bestimmt wird, und es steht die zweite Reflexionsfläche 22 des zweiten Anschlusselements 12 im Wesentlichen (d. h. bis auf unvermeidbare Toleranzen) senkrecht auf der Erstreckungsrichtung E des Messraums 14. Mit dem vorbestimmten Winkel bzw. Lagewinkel ε der Sensorvorrichtung 1 gemäß dem dritten Ausführungsbeispiel bilden die Längsachsen M der Anschlusselemente 11 und 12 sowie die Erstreckungsrichtung E des Messraums 14 zueinander ebenfalls den Lagewinkel ε, ungeachtet dessen, ob die Längsachsen M der beiden Anschlusselemente 11 und 12 parallel zur Horizontalen H angeordnet sind.

Die vorliegende Erfindung ist auf die Anordnung der Anschlusselemente 11 und 12 sowie der Ausrichtung ihrer jeweiligen Längsachse M parallel zur Horizontalen H nicht festgelegt. Es kann lediglich eine und damit zumindest eine der Längsachsen M der Anschlusselemente 11 oder 12 zur Horizontalen oder Bezugsrichtung H einen vorbestimmten Winkel aufweisen, d. h. es können beide Längsachsen M der Anschlusselemente 11 und 12 parallel zur Bezugsrichtung H oder zumindest eine der Längsachsen M des ersten oder zweiten Anschlusselements 11 oder 12 den weiteren Winkel relativ zur Bezugsrichtung H aufweisen.

Bei der Anordnung der Sensorvorrichtung 1 gemäß dem dritten Ausführungsbeispiel, wie es in Fig. 12 dargestellt ist, ist ebenfalls die Ausgestaltung gemäß Fig. 11 anwendbar, so dass in diesem Fall die zweite Reflexionsfläche 22 im Wesentlichen (d.h. bis auf unvermeidbare Toleranzen) senkrecht zur Erstreckungsrichtung E steht und die Abstrahlrichtung des Ultraschallmoduls 15 direkt auf die zweite Reflexionsfläche 22 des zweiten Anschlusselements 12 gerichtet ist. Die Abstrahlungsrichtung und Reflexionsrichtung der entsprechenden Ultraschallsignale folgt im Wesentlichen parallel zur Erstreckungsrichtung E.

Ferner können ebenfalls die erste und/oder zweite Öffnung 23 und/oder 25 des ersten und/oder zweiten Anschlusselements 11 oder 12 in der in Fig. 11 gezeigten Anordnung in einer Ebene parallel zur Erstreckungsrichtung E ausgebildet sein.

Es ist in Verbindung mit den vorstehend beschriebenen Ausführungsbeispielen bei der Strömung des flüssigen Mediums 3 durch die Sensorvorrichtung 1 gewährleistet, dass die eingebrachten oder entstehenden Luft- oder Gasblasen sicher und rasch abgeführt werden und nicht zu einer Verfälschung des Mess- oder Erfassungsergebnisses bei der auf Ultraschall beruhenden Messung führen. Es kann somit die Genauigkeit und Zuverlässigkeit der Erfassung hinsichtlich der Eigenschaften des flüssigen Mediums 3 durch die erfindungsgemäße Sensorvorrichtung 1 verbessert werden.

Die verwendeten Begriffe, wie "oben" oder "oberhalb" oder "unten" sind in Verbindung mit einer bestimmungsgemäßen Gebrauchslage der Sensorvorrichtung 1 zu sehen, wie sie beispielsweise in Figur 2 gezeigt ist, wobei die Steckereinrichtung 13 beim ersten Ausführungsbeispiel oben und beim zweiten Ausführungsbeispiel vorzugsweise unten angeordnet ist. Die Dimensionierung der Längsausdehnung des Messraums 14 entlang der Erstreckungsrichtung E ist abhängig von dem zur Verfügung stehenden Bauraum für die Sensorvorrichtung 1 sowie von dem flüssigen Medium 3 und der Verwertbarkeit der erfassten reflektierten Ultraschallsignale. Die Messraumwand 17 und/oder die Anschlusselemente 11 und/oder 12 können aus einem gegenüber dem flüssigen Medium 3 beständigen Material, beispielsweise aus Edelstahl oder einem entsprechendem Kunststoffmaterial bestehen.

Die vorliegende Erfindung wurde in Verbindung mit Ausführungsbeispielen in Verbindung mit den zugehörigen Figuren beschrieben.

Für den auf diesem Gebiet tätigen Fachmann ist es jedoch selbstverständlich, dass die Ausgestaltung der vorliegenden Erfindung gemäß den beschriebenen Figuren und die für die jeweiligen Bauteile und Komponenten verwendeten Bezugszeichen in den Figuren und der Beschreibung sowie die beispielhaften Angaben nicht einschränkend auszulegen sind.

Auch sind die in den einzelnen Figuren angegebenen Formen und Proportionen für ein besseres Verständnis schematisch und vereinfacht dargestellt, wobei die Erfindung auf die angegebenen Darstellungen und insbesondere auf die Dimensionen und Formen nicht beschränkt ist.

## Patentansprüche

1. Sensorvorrichtung zur Erfassung von Eigenschaften eines flüssigen Mediums (3) mittels Ultraschallsignalen, mit
- einem ersten Anschlusselement (11) und einem davon beabstandeten zweiten Anschlusselement (12) und einem zwischen den Anschlusselementen angeordneten Messraum (14), der mittels der Anschlusselemente (11, 12) abgeschlossen wird und von dem flüssigen Medium (3) durchströmt und mit diesem gefüllt ist, und
- einem Ultraschallmodul (15), das Ultraschallsignale in den Messraum (14) sendet und reflektierte Ultraschallsignale aus dem Messraum (14) empfängt, wobei
- die Anschlusselemente (11, 12) jeweilige Reflexionsflächen (21, 22) aufweisen, zum vorbestimmten Reflektieren der Ultraschallsignale im Messraum (14), und
- die Anschlusselemente (11, 12) jeweilige Öffnungen (23, 25) aufweisen zum Ein- und Ausströmen des flüssigen Mediums (3) in den und aus dem Messraum (14), und die Öffnungen (23, 25) oberhalb der Reflexionsflächen (21, 22) ausgebildet sind,
**dadurch gekennzeichnet, dass**
- die Anschlusselemente (11, 12) benachbart zu den und oberhalb der Reflexionsflächen (21, 22) jeweils einen Bereich parallel zur Längsachse des Messraums (14) aufweisen, in welchem die jeweilige Öffnung (23, 25) der Anschlusselemente (11, 12) ausgebildet sind, und die Ein- und Ausströmung des flüssigen Mediums (3) zwischen dem Bereich und einem benachbarten Teil einer Messraumwand (17) erfolgt.

2. Vorrichtung nach Anspruch 1, wobei die Öffnung (23) des ersten Anschlusselements (11) eine Einströmöffnung in den Messraum (14) und die Öffnung (25) des zweiten Anschlusselements (12) eine Ausströmöffnung für das flüssige Medium (3) aus dem Messraum (14) ist, und das Ultraschallmodul (15) benachbart zur Öffnung (23) des ersten Anschlusselements (11) und außerhalb des Messraums (14) angeordnet ist.

3. Vorrichtung nach Anspruch 1, wobei zwischen den jeweiligen Bereichen der Anschlusselemente (11, 12) parallel zu einer Erstreckungsrichtung (E) des Messraums (14) und dem benachbart angeordneten Teil der Messraumwand (17) ein Zwischenraum (27) gebildet wird, über den das flüssige Medium (3) und in Verbindung mit den jeweiligen Öffnungen (23, 25) in den Messraum (14) einströmt und aus diesem ausströmt.

4. Sensorvorrichtung zur Erfassung von Eigenschaften eines flüssigen Mediums (3) mittels Ultraschallsignalen, mit
- einem ersten Anschlusselement (11) und einem davon beabstandeten zweiten Anschlusselement (12) und einem zwischen den Anschlusselementen angeordneten Messraum (24), der mittels der Anschlusselemente (11, 12) abgeschlossen wird und von dem flüssigen Medium (3) durchströmt und mit diesem gefüllt ist, und
- einem Ultraschallmodul (15), das Ultraschallsignale in den Messraum (14) sendet und reflektierte Ultraschallsignale aus dem Messraum empfängt, wobei
- die Anschlusselemente (11, 12) jeweilige Öffnungen (23, 25) aufweisen zum Ein- und Ausströmen des flüssigen Mediums (3) in den und aus dem Messraum (14),
**dadurch gekennzeichnet, dass**
- das Ultraschallmodul (15) in einem der beiden Anschlusselemente (11, 12) angeordnet ist und die Ultraschallsignale in Richtung der Längsachse des Messraums (14) sendet und das andere der Anschlusselemente (11, 12) eine ebene Reflexionsfläche (22) senkrecht zu einer Erstreckungsrichtung (E) des Messraums (14) aufweist zum Reflektieren der Ultraschallsignale zurück zum Ultraschallmodul (15),
- die Öffnungen (23, 25) jeweils oberhalb der Reflexionsfläche (22) und der Position des Ultraschallmoduls (15) ausgebildet sind, und
- die Anschlusselemente (11, 12) benachbart zu und oberhalb der Reflexionsfläche (22) und oberhalb der Position des Ultraschallmoduls (15) jeweils einen Bereich parallel zur Erstreckungsrichtung (E) des Messraums (14) aufweisen, in welchem die jeweiligen Öffnungen (23, 25) angeordnet sind und die Ein- und Ausströmung des flüssigen Mediums (3) zwischen diesen Bereichen und einem benachbarten Teil einer Messraumwand (17) erfolgt.

5. Vorrichtung nach Anspruch 4, wobei die Öffnung (23) des ersten Anschlusselements (11) eine Einströmöffnung in den Messraum (14) und die Öffnung (25) des zweiten Anschlusselements (12) eine Ausströmöffnung für das flüssige Medium (3) aus dem Messraum (14) ist, und das Ultraschallmodul (15) in dem ersten Anschlusselement (11) gegenüber der Reflexionsfläche (22) des zweiten Anschlusselements (12) angeordnet ist.

6. Vorrichtung nach Anspruch 5, wobei zwischen den jeweiligen Bereichen der Anschlusselemente (11, 12) und dem benachbart angeordneten Teil der Messraumwand (17) ein Zwischenraum (27) gebildet wird, über den das flüssige Medium (3) von den jeweiligen Öffnungen (23, 25) in den Messraum (14) ein- und aus diesem ausströmt.

7. Vorrichtung nach Anspruch 1, wobei der Messraum (14) eine Erstreckungsrichtung (E) und das erste und zweite Anschlusselement (11, 12) eine jeweilige Längsachse (M) aufweisen, und die Erstreckungsrichtung (E) und die Längsachsen (M) zueinander parallel sind.

8. Vorrichtung nach Anspruch 1, wobei der Messraum (14) eine Erstreckungsrichtung (E) aufweist und die Erstreckungsrichtung (E) zu einer Bezugsrichtung (H) einen vorbestimmten Winkel (ε) derart aufweist, dass die zweite Öffnung (25) des zweiten Anschlusselements (12) höher angeordnet ist als die erste Öffnung (23) des ersten Anschlusselements (11).

## Claims

1. Sensor device for detecting properties of a liquid medium (3) by means of ultrasonic signals, comprising
- a first connection element (11) and a second connection element (12) spaced apart therefrom and a measuring chamber (14) which is arranged between the connection elements, is closed by means of the connection elements (11, 12), and through which the liquid medium (3) flows and which is filled with said medium, and
- an ultrasonic module (15) which transmits ultrasonic signals into the measuring chamber (14) and receives reflected ultrasonic signals from the measuring chamber (14),
- the connection elements (11, 12) having respective reflection surfaces (21, 22) for the predetermined reflection of the ultrasonic signals in the measuring chamber (14), and
- the connection elements (11, 12) having respective openings (23, 25) for the inflow and outflow of the liquid medium (3) into and out of the measuring chamber (14), and the openings (23, 25) being formed above the reflection surfaces (21, 22),
**characterised in that**
the connection elements (11, 12) each have, adjacent to and above the reflection surfaces (21, 22), a region parallel to the longitudinal axis of the measuring chamber (14), in which region the particular opening (23, 25) in the connection elements (11, 12) is formed, and liquid medium (3) flows in and out between the region and an adjacent part of a measuring-chamber wall (17).

2. Device according to claim 1, wherein the opening (23) in the first connection element (11) is an inflow opening into the measuring chamber (14) and the opening (25) in the second connection element (12) is an outflow opening for the liquid medium (3) flowing out of the measuring chamber (14), and the ultrasonic module (15) is arranged so as to be adjacent to the opening (23) in the first connection element (11) and outside the measuring chamber (14).

3. Device according to claim 1, wherein a gap (27) is formed between the respective regions of the connection elements (11, 12), which regions are parallel to an extension direction (E) of the measuring chamber (14), and the adjacently arranged part of the measuring-chamber wall (17), via which gap, in combination with the respective openings (23, 25), the liquid medium (3) flows into the measuring chamber (14) and flows out of said chamber.

4. Sensor device for detecting properties of a liquid medium (3) by means of ultrasonic signals, comprising
- a first connection element (11) and a second connection element (12) spaced apart therefrom and a measuring chamber (24) which is arranged between the connection elements, is closed by means of the connection elements (11, 12), and through which the liquid medium (3) flows and which is filled with said medium, and
- an ultrasonic module (15) which transmits ultrasonic signals into the measuring chamber (14) and receives reflected ultrasonic signals from the measuring chamber,
- the connection elements (11, 12) having respective openings (23, 25) for the inflow and outflow of the liquid medium (3) into and out of the measuring chamber (14),
**characterised in that**
- the ultrasonic module (15) is arranged in one of the two connection elements (11, 12) and transmits the ultrasonic signals in the direction of the longitudinal axis of the measuring chamber (14) and the other of the connection elements (11, 12) has a planar reflection surface (22) perpendicular to an extension direction (E) of the measuring chamber (14) for reflecting the ultrasonic signals back to the ultrasonic module (15),
- the openings (23, 25) are formed above the reflection surface (22) and above the position of the ultrasonic module (15), respectively, and
- the connection elements (11, 12) each have, adjacent to and above the reflection surface (22) and above the position of the ultrasonic module (15), a region parallel to the extension direction (E) of the measuring chamber (14), in which region the respective openings (23, 25) are arranged and the liquid medium (3) flows in and out between these regions and an adjacent part of a measuring-chamber wall (17).

5. Device according to claim 4, wherein the opening (23) in the first connection element (11) is an inflow opening into the measuring chamber (14) and the opening (25) in the second connection element (12) is an outflow opening for the liquid medium (3) flowing out of the measuring chamber (14), and the ultrasonic module (15) is arranged in the first connection element (11) opposite the reflection surface (22) of the second connection element (12).

6. Device according to claim 5, wherein a gap (27) is formed between the respective regions of the connection elements (11, 12) and the adjacently arranged part of the measuring-chamber wall (17), via which gap the liquid medium (3) flows from the respective openings (23, 25) into the measuring chamber (14) and out of said chamber.

7. Device according to claim 1, wherein the measuring chamber (14) has an extension direction (E) and the first and the second connection element (11, 12) have a particular longitudinal axis (M), and the extension direction (E) and the longitudinal axes (M) are parallel to each other.

8. Device according to claim 1, wherein the measuring chamber (14) has an extension direction (E) and the extension direction (E) has a predetermined angle (ε) with respect to a reference direction (H) such that the second opening (25) in the second connection element (12) is arranged higher than the first opening (23) in the first connection element (11).

## Revendications

1. Dispositif de détection destiné à détecter des propriétés d'un milieu liquide (3) au moyen de signaux ultrasonores, avec
- un premier élément de raccordement (11) et un deuxième élément de raccordement (12) espacé de celui-ci et une chambre de mesure (14) disposée entre les éléments de raccordement, qui est fermée au moyen des éléments de raccordement (11, 12) et est traversée par le milieu liquide (3) et remplie avec celui-ci, et
- un module à ultrasons (15), qui envoie des signaux ultrasonores dans la chambre de mesure (14) et reçoit les signaux ultrasonores réfléchis de la chambre de mesure (14), dans lequel
- les éléments de raccordement (11, 12) présentent des surfaces réfléchissantes (21, 22) respectives, pour le réfléchissement prédéfini des signaux ultrasonores dans la chambre de mesure (14), et
- les éléments de raccordement (11, 12) présentent des ouvertures (23, 25) respectives pour l'admission et l'évacuation du milieu liquide (3) dans la chambre de mesure (14) et à l'extérieur de celle-ci, et les ouvertures (23, 25) sont réalisées au-dessus des surfaces réfléchissantes (21, 22),
**caractérisé en ce que**
- les éléments de raccordement (11, 12) présentent au voisinage des surfaces réfléchissantes (21, 22) et au-dessus de celles-ci respectivement une zone parallèle à l'axe longitudinal de la chambre de mesure (14), dans laquelle l'ouverture (23, 25) respective des éléments de raccordement (11, 12) est formée, et l'admission et l'évacuation du milieu liquide (3) s'effectue entre la zone et une partie voisine d'une paroi de chambre de mesure (17).

2. Dispositif selon la revendication 1, dans lequel l'ouverture (23) du premier élément de raccordement (11) est une ouverture d'admission dans la chambre de mesure (14) et l'ouverture (25) du deuxième élément de raccordement (12) une ouverture d'évacuation pour le milieu liquide (3) de la chambre de mesure (14), et le module à ultrasons (15) est disposé au voisinage de l'ouverture (23) du premier élément de raccordement (11) et à l'extérieur de la chambre de mesure (14).

3. Dispositif selon la revendication 1, dans lequel un espace intermédiaire (27), par l'intermédiaire duquel le milieu liquide (3) afflue dans la chambre de mesure (14) et s'en évacue en liaison avec les ouvertures (23, 25) respectives, est formé entre les zones respectives des éléments de raccordement (11, 12) parallèlement à une direction d'étendue (E) de la chambre de mesure (14) et la partie, disposée au voisinage, de la paroi de chambre de mesure (17).

4. Dispositif de détection destiné à détecter des propriétés d'un milieu liquide (3) au moyen de signaux ultrasonores, avec
- un premier élément de raccordement (11) et un deuxième élément de raccordement (12) espacé de celui-ci et une chambre de mesure (24) disposée entre les éléments de raccordement, qui est fermée au moyen des éléments de raccordement (11, 12) et est traversée par le milieu liquide (3) et remplie avec celui-ci, et
- un module à ultrasons (15), qui envoie des signaux ultrasonores dans la chambre de mesure (14) et reçoit les signaux ultrasonores réfléchis de la chambre de mesure, dans lequel
- les éléments de raccordement (11, 12) présentent des ouvertures (23, 25) respectives pour l'admission et l'évacuation du milieu liquide (3) dans la chambre de mesure (14) et à l'extérieur de celle-ci,
**caractérisé en ce que**
- le module à ultrasons (15) est disposé dans un des deux éléments de raccordement (11, 12) et envoie les signaux ultrasonores en direction de l'axe longitudinal de la chambre de mesure (14), et l'autre des éléments de raccordement (11, 12) présente une surface réfléchissante (22) plate perpendiculairement à une direction d'étendue (E) de la chambre de mesure (14) pour le réfléchissement des signaux ultrasonores à nouveau en direction du module à ultrasons (15),
- les ouvertures (23, 25) sont réalisées respectivement au-dessus de la surface réfléchissante (22) et de la position du module à ultrasons (15), et
- les éléments de raccordement (11, 12) présentent au voisinage de la surface réfléchissante (22) et au-dessus de celle-ci et au-dessus de la position du module à ultrasons (15) respectivement une zone parallèle à la direction d'étendue (E) de la chambre de mesure (14), dans laquelle les ouvertures (23, 25) respectives sont disposées, et l'admission et l'évacuation du milieu liquide (3) s'effectue entre ces zones et une partie voisine d'une paroi de chambre de mesure (17).

5. Dispositif selon la revendication 4, dans lequel l'ouverture (23) du premier élément de raccordement (11) est une ouverture d'admission dans la chambre de mesure (14) et l'ouverture (25) du deuxième élément de raccordement (12) une ouverture d'évacuation pour le milieu liquide (3) de la chambre de mesure (14), et le module à ultrasons (15) est disposé dans le premier élément de raccordement (11) à l'opposé de la surface réfléchissante (22) du deuxième élément de raccordement (12).

6. Dispositif selon la revendication 5, dans lequel un espace intermédiaire (27), par l'intermédiaire duquel le milieu liquide (3) afflue dans la chambre de mesure (14) et s'en évacue par les ouvertures (23, 25) respectives, est formé entre les zones respectives des éléments de raccordement (11, 12) et la partie, disposée au voisinage, de la paroi de chambre de mesure (17).

7. Dispositif selon la revendication 1, dans lequel la chambre de mesure (14) présente une direction d'étendue (E) et le premier et deuxième élément de raccordement (11, 12) un axe longitudinal (M) respectif, et la direction d'étendue (E) et les axes longitudinaux (M) sont parallèles les uns aux autres.

8. Dispositif selon la revendication 1, dans lequel la chambre de mesure (14) présente une direction d'étendue (E) et la direction d'étendue (E) présente par rapport à une direction de référence (H) un angle (ε) prédéfini, de telle sorte que la deuxième ouverture (25) du deuxième élément de raccordement (12) est disposée plus haut que la première ouverture (23) du premier élément de raccordement (11).
